# EUROPEAN PATENT SPECIFICATION

(11) **EP 4 588 045 B1**
(45) Date of publication and mention of the grant of the patent: **25.11.2026**
(21) Application number: 23769194.4
(22) Date of filing: 13.09.2023
(51) Int. Cl.: G10L 19/012, G10L 19/008, G10L 25/84, G10L 19/20, G10L 25/06

(54) **ADAPTIVE INTER-CHANNEL TIME DIFFERENCE ESTIMATION**
ADAPTIVE ZEITDIFFERENZSCHÄTZUNG ZWISCHEN KANÄLEN
ESTIMATION ADAPTATIVE DE DIFFÉRENCE DE TEMPS ENTRE CANAUX

(30) Priority: 13.09.2022 US 202263406127 P
(43) Date of publication of application: 23.07.2025
(60) Divisional application: 26213256.6
(73) Proprietor: Telefonaktiebolaget LM Ericsson (publ), 164 83 Stockholm (SE)
(72) Inventor: JANSSON TOFTGÅRD, Tomas, 164 80 Stockholm (SE); SEHLSTEDT, Martin, 977 53 Luleå (SE); JANSSON, Fredrik, 164 83 Stockholm (SE)
(74) Representative: Ericsson
(86) International application number: PCT/EP2023/075087
(87) International publication number: WO 2024/056702

(56) References cited:
- EP-B1- 3 511 934
- [NONE]: "ITU-T Wideband embedded extension for ITU-T G.711 pulse code modulation; Recommendation ITU-T G.711.1 (09/2012)", 13 September 2012 (2012-09-13), XP055407180, Retrieved from the Internet <URL:https://www.itu.int/rec/T-REC-G.711.1-201209-I/en> [retrieved on 20170915]

## Description

### CROSS-REFERENCE TO RELATED APPLICATIONS

This application claims the priority benefit of U.S. Provisional Patent Application Serial No. 63/406,127, filed September 13, 2022.

### TECHNICAL FIELD

The present disclosure relates generally to communications, and more particularly to communication methods and related devices and nodes supporting encoding and decoding.

### BACKGROUND

In communications networks, there may be a challenge to obtain good performance and capacity for a given communications protocol, its parameters, and the physical environment in which the communications network is deployed.

For example, although the capacity in telecommunication networks is continuously increasing, it is still of interest to limit the required resource usage per user. In mobile telecommunication networks, less required resource usage per call means that the mobile telecommunication network can service a larger number of users in parallel. Lowering the resource usage also yields lower power consumption in both devices at the user-side (e.g., terminal devices) and devices at the network-side (e.g., network nodes). This translates to energy and cost saving for the network operator, while enabling prolonged battery life and increased talk-time for the terminal devices.

One mechanism for reducing the required resource usage for speech communication applications in mobile telecommunication networks is to exploit natural pauses in the speech. For example, in most conversations only one party is active at a time, and thus pauses in speech occurring in one communication direction will typically occupy more than half of the signal. One way to utilize this property to decrease the required resource usage is to employ a Discontinuous Transmission (DTX) system, where the active signal encoding is discontinued during speech pauses. EP3511934B1 discloses a multichannel audio encoding method using DTX.

Typically, the encoding process is performed on the audio signal segments (e.g., referred to as frames) where input audio samples during a time interval, typically 10-20 milliseconds (ms), are buffered and used by an encoder to extract the parameters to be transmitted to a decoder.

During speech pauses, it is common to transmit 'silence insertion descriptor' (SID) frames at a very low bit rate encoding of the background noise to allow for a Comfort Noise Generator (CNG) system at the receiving end to fill the above-mentioned pauses with a background noise that has similar characteristics as the original noise. Notably, the CNG makes the pauses sound more natural (e.g., as compared to having completely silent speech pauses) since the background noise is maintained and not switched on and off together with the speech sounds. Complete silence in the speech pauses is commonly perceived as an annoyance and often leads to the misconception that the call has been disconnected.

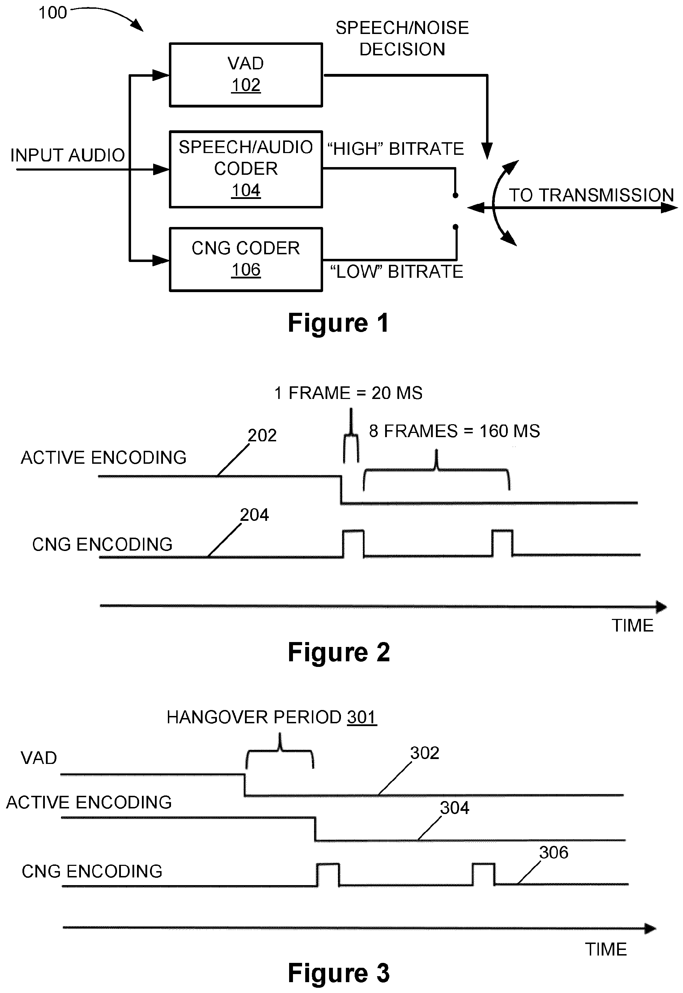

A DTX system may rely on a Voice Activity Detector (VAD), which indicates to the transmitting device whether to use i) active signal encoding or ii) low rate background noise encoding. In this respect, the transmitting device might be configured to differentiate between other source types by using a (Generic) Sound Activity Detector (GSAD or SAD), which not only distinguishes speech noise from background noise but can also be configured to detect music or other signal types deemed to be relevant. A block diagram of a DTX system 100 is illustrated in Figure 1.

In Figure 1, input audio is received by the VAD 102, the speech/audio coder 104, and the CNG coder 106. The VAD 102 indicates whether to transmit the "high" bitrate from speech/audio coder 104 or transmit the "low" bitrate from CNG coder 106.

Communication services may be further enhanced by supporting stereo or multichannel audio transmissions. In these cases, the DTX/CNG system might also account for the spatial characteristics of the signal in order to provide a pleasant-sounding comfort noise.

A common mechanism used to generate comfort noise is to transmit information about the energy and spectral shape of the background noise in the speech pauses. This can be accomplished using a significantly lower number of bits than the regular coding of speech segments. Normally, this information is sent less frequently than in the active segments as depicted in Figure 2 where the active segments are illustrated as active encoding (e.g., see active encoding signal 202) and the information about the energy and spectral shape of the background noise in the speech pauses are illustrated as CN encoding signaling 204.

A common feature in DTX systems is to add a "hangover period" 301 to the VAD decision as illustrated in Figure 3. During this period, active encoding is still be used even though the VAD decision (see signal 302) is that there should not be active encoding (e.g., see active encoding signal 304). This is to avoid short segments of CNG in the middle of longer active segments, e.g., in breathing pauses in a speech utterance (e.g., see signal 306). Parameters used for CNG generation can be estimated during this period.

At the receiving side, the comfort noise is generated by creating a pseudo random signal and then shaping the spectrum of the signal with a filter based on information received from the transmitting device. The signal generation and spectral shaping can be performed in the time domain or the frequency domain.

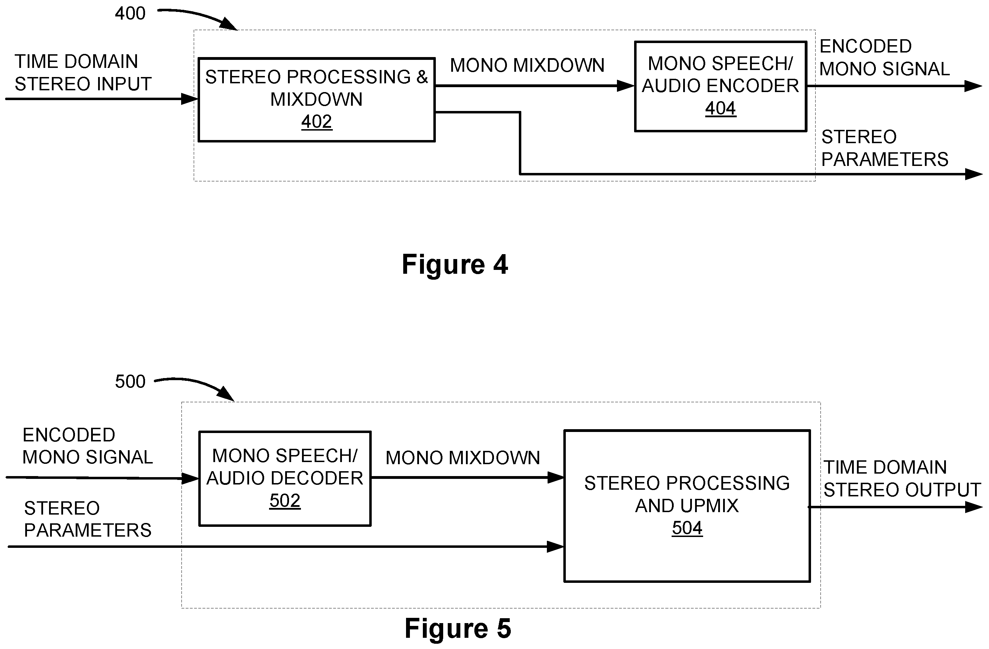

For stereo operation, additional parameters are transmitted to the receiving side. In a typical stereo signal, the channel pair shows a high degree of similarity, or correlation. State-of-the-art stereo coding schemes exploit this correlation by employing parametric coding, where a single channel is encoded with high quality and complemented with a parametric description that enables reconstruction of the full stereo image. The process of reducing the channel pair into a single channel is called a down-mix. Similarly, the resulting channel may be referred to as the down-mix channel or mixdown channel. The down-mix procedure typically tries to maintain the energy by aligning inter-channel time differences (ITD) and inter-channel phase differences (IPD) before mixing the channels. To maintain the energy balance of the input signal, the inter-channel level difference (ILD) is also measured. The ITD, IPD and ILD are then encoded and may be used in a reversed up-mix procedure when reconstructing the stereo channel pair at a decoder. As discussed below, Figure 4 and Figure 5 depicts block diagrams of a parametric stereo encoder 400 and decoder 500.

In Figure 4, time domain stereo input is received by a stereo processing and mixdown module 402. The stereo processing and mixdown module 402 processes the time domain stereo input signals and produces a mono mixdown signal and stereo parameters (e.g., ITD, IPD, and/or ILD). The mono mixdown signal is received by a mono speech/audio encoder 404, which processes the mono mixdown signal and produces an encoded mono signal. The encoded mono signal and the stereo parameters are transmitted towards a decoder such as the parametric stereo decoder 500 (depicted in Figure 5).

In Figure 5, the encoded mono signal is received by a mono speech/audio decoder 502 which decodes the encoded mono signal and produces a mono mixdown signal. The mono mixdown signal and the stereo parameters are received by a stereo processing and upmix decoder 504, which processes the mono mixdown signal and stereo parameters and produces time domain stereo output. The time domain stereo output can be stored or sent to an audio player for playback.

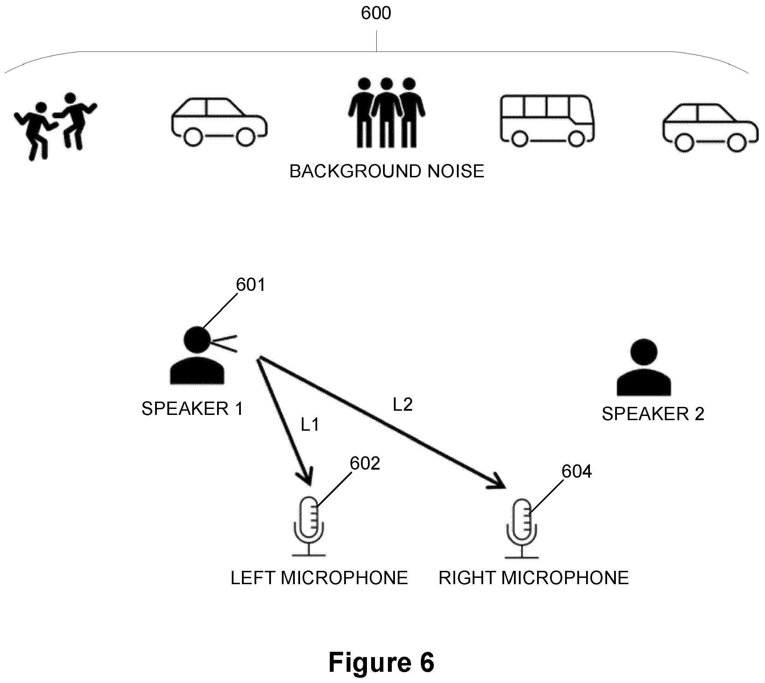

Figure 6 is an illustration of a practical example of the occurrence of ITD. As depicted in Figure 6, if a stereo signal is captured by two microphones 602-604, the distance (L1) from the source (e.g., speaker source 601) to the left microphone 602 may be different from the distance (L2) to the right microphone 604. The difference in distance will lead to a time delay between the channels, i.e., the ITD. If there are several audio sources, these sources may have different ITDs. The background noise (e.g., sources 600) will often be a sum of many sources and may not have one apparent ITD.

The conventional parametric approach to estimate the ITD relies on the cross-correlation function (CCF) *r_{xy}* which is a measure of similarity between two waveforms x[n] and y[n], and is generally defined in the time domain as: ${r}_{xy} \left[τ\right] = E \left\{x\left[n\right]y\left[n+τ\right]\right\} ,$ where *τ* is the time-lag parameter and *E*{·} is the expectation operator. For a signal frame of length N, the cross-correlation is typically estimated as: $\hat{{r}_{xy}} \left[τ\right] = {\sum }_{n = 0}^{N - 1} x \left[n\right] y \left[n+τ\right] .$

The Inter-channel Cross-correlation Coefficient (ICC) is conventionally obtained as the maximum of the CCF, which is normalized by the signal energies as follows: $ICC = {max}_{τ = ITD} \left(\frac{{r}_{xy \left[τ\right]}}{\sqrt{{r}_{xx} \left[0\right] {r}_{yy} \left[0\right]}}\right) .$

The time lag *τ* corresponding to the ICC is determined as the ITD between the channels x and y. By assuming x[n] and *y*[*n*] are zero outside the signal frame, the cross-correlation function can equivalently be expressed as a function of the cross-spectrum of the frequency spectra *X*[*k*] and *Y*[*k*] (with discrete frequency index *k*) as: ${X}_{corr} \left[k\right] = X \left[k\right] Y * \left[k\right]$ ${r}_{xy} \left[τ\right] = {DFT}^{- 1} \left({X}_{corr}\left[k\right]\right)$ where *X*[*k*] is the discrete Fourier transform (DFT) of the time domain signal x[n], i.e., $X \left[k\right] = {\sum }_{n = 0}^{N - 1} x \left[n\right] {e}^{- i \frac{2 π}{N} kn} , k = 0 , … , N - 1$ and the *DFT*⁻¹(·) or *IDFT*(*·*) denotes the inverse discrete Fourier transform.

For the case when y[n] is purely a delayed version of x[n], the cross-correlation function is given by: ${r}_{xy} \left[τ\right] = {DFT}^{- 1} \left(X\left[k\right]{X}^{∗}\left[k\right]{e}^{- i \frac{2 π}{N} {kτ}_{0}}\right) = {r}_{xx} \left[τ\right] ∗ δ \left(τ-{τ}_{0}\right) ,$ where * denotes convolution and *δ*(*τ* - *τ*₀) is the Kronecker delta function, i.e., it is equal to one at *τ*₀ and zero otherwise. This means the cross-correlation function between *x* and *y* is the delta function spread by the convolution with the autocorrelation function for x[n]. This will broaden the delta peak. For signal frames with several delay components, e.g., several speakers/talkers, there will be peaks at each delay present between the signals, and the cross correlation becomes ${r}_{xy} \left[τ\right] = {r}_{xx} \left[τ\right] ∗ {\sum }_{i} δ \left(τ-{τ}_{i}\right) .$

The delta functions might then be spread into each other and make it difficult to identify the several delays within the signal frame. There are, however, generalized cross-correlation (GCC) functions that do not have this spreading. The GCC is generally defined as: ${r}_{xy}^{GCC} \left[τ\right] = {DFT}^{- 1} \left(ψ\left[k\right]X\left[k\right]Y*\left[k\right]\right)$ where *ψ*[*k*] is a frequency weighting. Especially for spatial audio, the phase transform (PHAT) has been utilized due to its robustness for reverberation in low noise environments. The phase transform is basically the absolute value of each frequency coefficient, i.e., $ψ \left[k\right] = \frac{1}{\left|X\left[k\right]Y*\left[k\right]\right|} .$

This frequency weighting will thereby whiten the cross-spectrum such that the power of each component becomes equal. With pure delay and uncorrelated noise in the signals x[n] and y[n], the phase transformed GCC (GCC-PHAT) becomes the Kronecker delta function δ(*τ* - *τ*₀), i.e., ${r}_{xy}^{PHAT} \left[τ\right] = {DFT}^{- 1} \left(\frac{X \left[k\right] {X}^{∗} \left[k\right] {e}^{- i \frac{2 π}{N} {kτ}_{0}}}{\left|X\left[k\right]{X}^{∗}\left[k\right]\right|}\right) = {DFT}^{- 1} \left({e}^{- i \frac{2 π}{N} {kτ}_{0}}\right) = δ \left(τ-{τ}_{0}\right) .$

The encoding process is conducted on time segments called frames, where the common lengths of these segments are 10 or 20 ms. The coding parameters, like the ITD, are estimated at the encoding side on a per frame basis and are transmitted to the decoder. It is also common to not transmit a parameter if there is no clear gain in the encoding process with using the parameter. In the ITD case, this will be when the left and right signals are more or less uncorrelated.

### SUMMARY

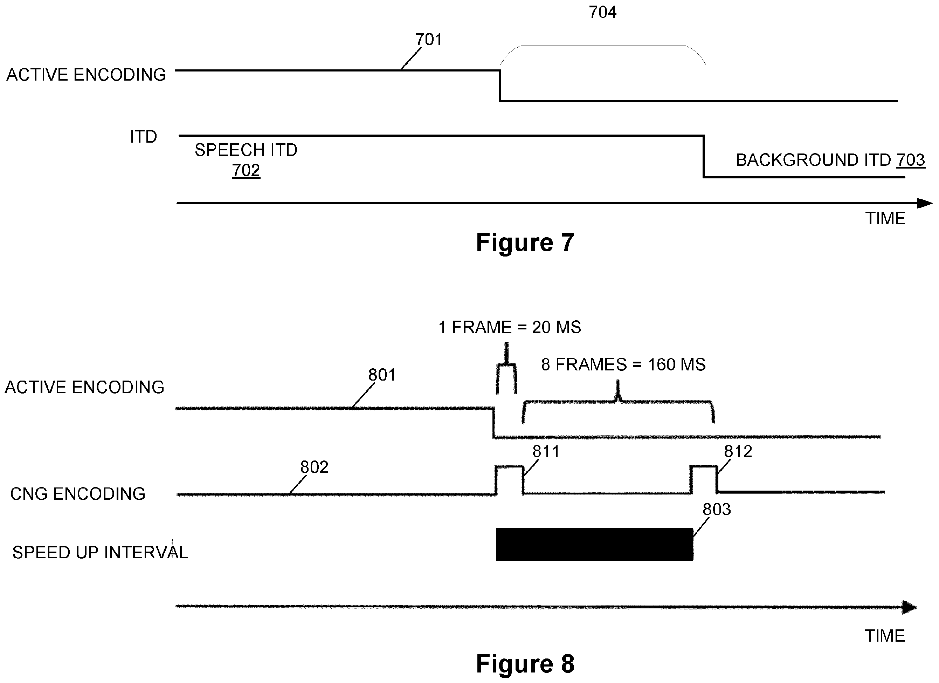

There currently exist certain challenge(s). The CNG that is generated during speech pauses when DTX is enabled is encoded at a very low bit rate. There is no other part of the CNG encoding that can counteract the effect of an incorrect ITD. In speech pauses, it is likely that the ITD will be different as compared to the speech segments. For example, Figure 7 is a signaling diagram illustrating ITD delay according to some embodiments. In such cases, the low-pass filtering of the cross spectrum afforded by the current solution will lead to a delay in the change from the "speech ITD", i.e., signal portion 702, to the "background noise ITD", i.e., signal portion 703. If this delay 704 in the active encoding signal 701 is long enough, e.g., 1 second or more, the listener will initially hear the background noise e.g., ITD signal portion 702 generated with the speech ITD and then hear a sudden change of the ITD to the correct one e.g., signal portion 703. This will be easily perceived as a significant change in the spatial characteristics of the background noise and may serve as an annoyance to the listener.

If the smoothing of the cross-spectrum is based on the spectral flatness, the issue will be stronger for background noises that have a strong spectral tilt. The spectral flatness measure is typically used to indicate a tonal or periodic signal structure. However, some noise signals will also yield a low spectral flatness measure due to a strongly tilted spectrum. This is often the case for car noise, which typically has a strong low frequency component. If the smoothing of the cross-spectrum is based on the spectral flatness, the smoothing will be strong for such background noises. This may lead to a delayed shift in ITD as mentioned above.

Certain aspects of the disclosure and their embodiments may provide solutions to these or other challenges. The various embodiments described herein are directed to speeding up the low-pass filtering of the cross correlation to allow a faster adaptation of the ITD in the beginning of each CNG segment. This may be achieved in several ways, including but not limited to, the modifying of the low-pass filter coefficient.

In some embodiments, the disclosed subject matter includes a method to estimate an inter-channel time difference (ITD) in an encoder using a discontinuous transmission (DTX) is disclosed. One example method includes receiving (1601) a time domain audio input comprising audio input signals and processing (1603) the audio input signals in frames to produce a mono mixdown signal and one or more stereo parameters. The method further includes encoding the mono mixdown signal on a frame-by-frame basis by: encoding (1605) of active content of the mono mixdown signal at a first bit rate until a pause period is detected in the audio input signals or mono mixdown signal; estimating ITD parameters during the encoding of active content based on a low-pass filtering of the cross-spectra of the audio input signals or averaging of the cross-spectra; switching (1607) the encoding from the active encoding content to inactive encoding to encode background noise at a second bit rate during the pause period; and estimating (1609) ITD parameters during the pause period (or inactive encoding) based on a low-pass filtering of cross-spectra of the audio input signals or averaging of the cross-spectra wherein the estimating is being configured to adapt to the audio input signals faster as (e.g., speeding up ITD estimation) compared to when estimating the ITD parameters during the encoding of active content. The method further includes encoding (1611) the ITD estimated parameters and other stereo parameters periodically during the pause period.

According to at least one embodiment of the disclosed subject matter, the method further includes speeding up a smoothing of a cross-spectra by increasing the low-pass filtering coefficient during a DTX hangover period and/or during a start of the pause period compared to prior to the DTX hangover period and/or the start of the pause period.

According to at least one embodiment of the disclosed subject matter, the method further includes, in a first encoding frame after active coding, replacing a state of a first cross spectra low-pass filter *X_{corr_smooth}* with a state of a second low-pass filter *X_{spec_smooth}* which filters the cross spectrum but is only updated during hangover and pause periods.

According to at least one embodiment of the disclosed subject matter, the method further includes starting an update of the second low-pass filter *X_{spec_smooth}* during a DTX hangover period.

According to at least one embodiment of the disclosed subject matter, the method further includes speeding up the update of the state of the second low-pass filter *X_{spec_smooth}* responsive to the filtering being slow due to a low spectral flatness measure, *sfm.*

According to at least one embodiment of the disclosed subject matter, the method further includes wherein *X_{spec_smooth}* is determined in accordance with ${X}_{spec _ smooth} \left[k, m\right] = \left(1-{α}_{lim}^{hangover}\right) ⋅ {X}_{spec _ smooth} \left[k,m-1\right] + {α}_{lim}^{hangover} ⋅ {X}_{corr} \left[k\right]$ and *X_{corr_smooth}* is determined in accordance with ${X}_{corr _ smooth} \left[k, m\right] = \left(1-{α}_{lim}^{cng}\right) ⋅ {X}_{corr _ smooth} \left[k,m-1\right] + {α}_{lim}^{cng} ⋅ {X}_{corr} \left[k\right]$ where ${α}_{lim}^{hangover}$ and ${α}_{lim}^{cng}$ are low pass coefficients.

According to at least one embodiment of the disclosed subject matter, the method further includes wherein ${α}_{lim}^{hangover}$ and ${α}_{lim}^{cng}$ are determined in accordance with ${α}_{lim}^{hangover} = max \left({α}_{default},min\left({A}^{hangover}, \frac{{B}^{hangover}}{{N}_{exp} + {N}_{updates}}\right)\right)$ and ${α}_{lim}^{cng} = max \left({α}_{default},min\left({A}^{cng}, \frac{{B}^{cng}}{{N}_{exp} + {N}_{updates}}\right)\right)$ where *A^{hangover}* and *A^{cng}* are upper thresholds, and *B^{hangover}* and *B^{cng}* are rate parameters.

According to at least one embodiment of the disclosed subject matter, the method further includes wherein ${α}_{lim}^{hangover}$ and ${α}_{lim}^{cng}$ are determined in accordance with ${α}_{lim}^{hangover} = max \left({α}_{default},min\left({A}^{hangover}, \frac{min \left({B}_{0}+{N}_{hangover},{B}^{hangover}\right)}{{N}_{exp} + {N}_{updates}}\right)\right)$ and ${α}_{lim}^{cng} = max \left({α}_{default},min\left({A}^{cng}, \frac{{B}^{cng}}{{N}_{exp} + {N}_{updates}}\right)\right)$ where *A^{hangover} and A^{cng}* are upper thresholds, *B^{hangover}* and *B^{cng}* are rate parameters, *N_{hangover}* corresponds to the number of hangover frames and *B*₀ is a variable.

According to at least one embodiment of the disclosed subject matter, the method further includes adjusting a low-pass filter coefficient during the DTX hangover period and/or during the start of the pause period.

According to at least one embodiment of the disclosed subject matter, the method further includes wherein adjusting the low pass filter coefficient comprises adjusting the low-pass filter coefficient in accordance with $\begin{matrix}{X}_{corr _ smooth} \left[k, m\right] = \left(1-{α}_{1}\right) ⋅ {X}_{{corr}_{smooth}} \left[k,m-1\right] + {α}_{1} ⋅ {X}_{corr} \left[k\right] , {cng}_{counter} \\ < CNG _ ITD _ CNT\end{matrix}$ $\begin{matrix}{X}_{corr _ smooth} \left[k, m\right] = \left(1-sfm\right) ⋅ {X}_{corr _ smooth} \left[k,m-1\right] + sfm ⋅ {X}_{corr} \left[k\right] , {cng}_{counter} \\ \geq CNG _ ITD _ CNT\end{matrix}$ ${α}_{1} = min \left(A, sfm+A∗\left(\frac{CNG _ ITD _ CNT - {cng}_{counter}}{CNG _ ITD _ CNT}\right)\right)$ ${cng}_{counter} = {cng}_{counter} + 1 , if CNG frame$ ${cng}_{counter} = 0 , if Speech frame$ where α₁ is the low-pass filter coefficient, *k = frequency bin, m* = *frame number, X_{corr}*[*k*] is a cross spectrum, *X_{corr_smooth} [k,* m] is a low-pass filtering of the cross-spectrum, CNG frame is an inactive coding frame, and Speech frame is an active encoding frame, and *sfm* is a spectral flatness measure, A is an upper threshold.

According to at least one embodiment of the disclosed subject matter, the method further includes speeding up smoothing of cross-spectra by the low-pass filtering during a start of the pause period comprises triggering the speed up of the filtering of the cross-spectra after active encoding of a number of consecutive active frames have been reached.

According to at least one embodiment of the disclosed subject matter, the method further includes executing a dedicated cross-correlation estimate that is only updated during the pause periods and/or during DTX hangover frames for the cross spectra and using the dedicated cross-correlation estimate for the ITD estimation in the pause period.

According to at least one embodiment of the disclosed subject matter, the method further includes resetting the cross-spectrum low-pass filter state at one of prior to any updates in a DTX hangover period and prior to any updates in the pause period.

According to at least one embodiment of the disclosed subject matter, the method further includes replacing a low-pass filter state at the start of a hangover period or at the start of the pause period.

According to at least one embodiment of the disclosed subject matter, the method further includes wherein replacing the low-pass filtering at the start of the pause period comprises averaging the cross spectra *X_{corr}*[*k*] over a number of *CNG*_*ITD_CNT* frames and replace the filter state *X_{corr_smooth}* with an average of the cross spectra *X_{corr_}[k]* over the number of *CNG_ITD_CNT* frames.

According to at least one embodiment of the disclosed subject matter, the method further includes transmitting the active content encoded, the background noise encoded, and the ITD parameters and other stereo parameters encoded towards a decoder.

Certain embodiments may provide one or more of the following technical advantage(s). The various embodiments permit the comfort noise to sound more natural and avoid annoying effects associated with a sudden change in the spatial characteristics during CNG after changing from active coding. In particular, one avoids that the DTX starts with a segment of comfort noise colored by the active content and then, after some time, suddenly changes to a comfort noise that more closely resembles the original input noise.

A faster adaptation of the comfort noise to the background noise may also improve the ITD estimation in speech onsets since the influence in the ITD estimation from the previous speech segment is decreased.

### BRIEF DESCRIPTION OF THE DRAWINGS

The accompanying drawings, which are included to provide a further understanding of the disclosure and are incorporated in and constitute a part of this application, illustrate certain non-limiting embodiments of inventive concepts. In the drawings:
Figure 1 is a block diagram of a discontinuous transmission (DTX) system;
Figure 2 is a flow diagram illustrating comfort noise generator (CNG) parameter encoding and transmission;
Figure 3 is a flow diagram illustrating a voice activity detector (VAD) (or DTX) hangover period;
Figure 4 is a block diagram of a parametric stereo encoder according to some embodiments;
Figure 5 is a block diagram of a parametric stereo decoder according to some embodiments;
Figure 6 is an illustration of inter-channel time difference inter-channel time difference (ITD) according to some embodiments;
Figure 7 is a flow diagram illustrating ITD delay according to some embodiments;
Figure 8 is a flow diagram illustrating a filter speed up period according to some embodiments;
Figure 9 is a flow diagram illustrating VAD speech/CNG toggling according to some embodiments;
Figure 10 is a flow diagram illustrating no filter speed up after a short active period of filter speed up according to some embodiments;
Figure 11 is a flow diagram illustrating replacing cross spectra filter state according to some embodiments;
Figure 12 is a flow diagram illustrating potential reset of filter state for second cross spectra filter state, speed up of filter state update based on gradually decreasing lower threshold for filter state updates, copying of filter state to the first cross spectra filter state, and continued gradually decreasing lower threshold for filter state updates according to some embodiments;
Figure 13 is a block diagram of an encoder in accordance with some embodiments;
Figure 14 is a block diagram of a decoder in accordance with some embodiments;
Figure 15 is a block diagram of a virtualization environment in accordance with some embodiments; and
Figures 16-23 are flow charts illustrating operations of an encoder according to some embodiments.

### DETAILED DESCRIPTION

Some of the embodiments contemplated herein will now be described more fully with reference to the accompanying drawings. Embodiments are provided by way of example to convey the scope of the subject matter to those skilled in the art, in which examples of embodiments of inventive concepts are shown. Inventive concepts may, however, be embodied in many different forms and should not be construed as limited to the embodiments set forth herein. The invention is defined by the appended claims.

Embodiments of the disclosed subject matter pertains to methods and techniques of implementing an adaptive ITD estimation. Notably, the speed up of the low-pass filtering of the cross correlation estimate in the beginning of each CNG segment permits a faster adaptation of the ITD estimate. Notably, utilizing low-pass filtering in this manner may be achieved in several ways, such as by modifying the low-pass filter coefficient. In some embodiments, the ITD estimation processes and/or techniques disclosed herein may be executed via an encoder element and/or its ITD estimation engine (IEE) as described below.

For the ITD, it is desirable to have an ITD estimate that does not have a small random variation on a frame-by-frame basis. One way to stabilize the estimate is to apply a low-pass filter to the cross spectrum using a simple first order filter, such as: ${X}_{corr _ smooth} \left[k, m\right] = \left(1-α\right) ∗ {X}_{corr _ smooth} \left[k,m-1\right] + α ∗ {X}_{corr} \left[k\right]$ wherein *k* = frequency bin and *m* = frame number.

The filter coefficient α can be fixed, but it may also be adaptive. One example is to use a spectral flatness measure (sfm) calculated on the left or right input signal as the filter coefficient. $sfm = \frac{\sqrt[N]{{\prod }_{n = 0}^{N - 1} x \left(n\right)}}{\frac{{\sum }_{n = 0}^{N - 1} x \left(n\right)}{N}} = \frac{{e}^{\frac{{\sum }_{n = 0}^{N - 1} ln \left(x\left(n\right)\right)}{N}}}{\frac{{\sum }_{n = 0}^{N - 1} x \left(n\right)}{N}}$ ${X}_{corr smooth} \left[k, m\right] = \left(1-sfm\right) ∗ {X}_{corr smooth} \left[k,m-1\right] + sfm ∗ {X}_{corr} \left⌈k\right⌉$

This measure will have the range 0.0 - 1.0 where a higher value would indicate a flatter spectrum. Using this coefficient may improve the robustness and accuracy of the ITD estimation.

Within a stereo or multichannel audio encoding system, ITD parameters are generated based on channel pairs, where the ITD estimation is based on a low-pass filtering or averaging of a cross-spectrum, and the low-pass filtering of the cross-spectrum is controlled based on the DTX and Voice/Sound Activity Detector decisions.

Various embodiments enable the ITD calculation to be adaptive and controlled by the DTX system. Transitions occur from active content to CNG when the coding goes from active content to background content, which may have significantly different spatial properties (e.g., the inter-channel time difference or coherence). For such changes occurring in the signal characteristics of the encoded spatial audio, it can be beneficial to make the adaptation to the change in content quicker.

The reason for the time difference existing between the signal in the left and right channels is due to the positioning of the sound source in relation to the capture microphones. In a conversational speech scenario with one or several speakers and environmental noise in the background, this means that there may be a sudden change in ITD when the speakers stop talking, i.e., when the DTX system make the coding process switch over to CNG.

In many cases, the background noise will provide fairly uncorrelated signals in the left and right channel. This means that there is no ITD detected and the encoder may not transmit an ITD parameter, i.e., basically assuming ITD to be zero. In the case where the background noise is dominated by a single source (e.g., a fan or some machinery), ITD present in the background noise may differ from the ITD of the speech. One can assume that in a reasonable scenario the speech level will be significantly higher than the background noise level and that the estimated ITD during speech will be based on the speech signal.

It is not desirable to have an ITD estimation that varies between each frame but it should follow any change in the input signal, e.g., if the speaker is moving or if there are several speakers that take turns speaking.

Low-pass filtering the cross spectra is one way to smooth the ITD estimation to avoid frequent changes of the estimated ITD. If there is a sudden change in the ITD, the smoothing will introduce a delay in the ITD estimation thereby allowing a period of time before the ITD estimate has adapted to the new ITD. There will be a tradeoff between having a stable ITD estimate and the speed with which the ITD estimation can follow a change.

In the case where DTX is used, there is a decision made as to whether active encoding or CNG encoding is to be used for the current frame. It is likely that the ITD will differ between active encoding, and as such, the focus of the embodiments of the disclosed subject matter is to speed up the ITD estimate by an adaptive filtering and update of the cross spectra (or time domain cross correlation) estimate for the beginning of a CNG encoding segment. This may be achieved by several techniques as described below.

### Adjusting the low-pass filter coefficient

In order to speed up the ITD estimation in a transition from active speech encoding to CNG encoding, the low-pass filter coefficient is adjusted during at the start of the CNG period. In the example below, the filter coefficient is changed during the *CNG_ITD_CNT* first frames. The processing depends both on the current frame, m, and the previous frame, m - 1. To clarify this, the notations are complemented with a frame index. ${X}_{corr _ smooth} \left[k, m\right] = \left(1-{α}_{1}\right) ∗ {X}_{corr _ smooth} \left[k,m-1\right] + {α}_{1} ⋅ {X}_{corr} \left[k\right] , {cng}_{counter} < CNG _ ITD _ CNT$ ${X}_{corr _ smooth} \left[k, m\right] = \left(1-sfm\right) ⋅ {X}_{corr _ smooth} \left[k,m-1\right] + sfm ⋅ {X}_{corr} \left[k\right] , {cng}_{counter} \geq CNG _ ITD _ CNT$ ${α}_{1} = min \left(A, sfm+A∗\left(\frac{CNG _ ITD _ CNT - {cng}_{counter}}{CNG _ ITD _ CNT}\right)\right)$ ${cng}_{counter} = {cng}_{counter} + 1 , if CNG frame$ ${cng}_{counter} = 0 , if Speech frame$ $sfm = \frac{\sqrt[N]{{\prod }_{n = 0}^{N - 1} x \left(n\right)}}{\frac{{\sum }_{n = 0}^{N - 1} x \left(n\right)}{N}} = \frac{{e}^{\frac{{\sum }_{n = 0}^{N - 1} ln \left(x\left(n\right)\right)}{N}}}{\frac{{\sum }_{n = 0}^{N - 1} x \left(n\right)}{N}}$

Normally in CNG encoding, the encoded frames are not sent as frequently as for the speech encoding. This is illustrated in Figure 8, which depicts active encoding signal 801 and CNG encoding signal 802. Typically, CNG encoded frames are sent every 8^{th} frame (e.g., SID frames 811 and 812 in CNG encoding signal 802) with nothing transmitted for the 7 frames (e.g., 'speed up interval' 803 in Figure 8) in between the CNG frames.

If the ITD estimation is run with the same time interval as for active coding and *CNG_ITD_CNT* is set to '8', it means that only one ITD estimation will be sent to the decoder during the time interval under which the filter coefficients are changed and where one could expect the estimates to be more unstable. The upper threshold A may, for example, be set to '0.8' to ensure that the smoothing over frames is not too weak. However, *α*₁ may also be set to allow a higher filter coefficient when *sfm* is exceeding *A,* i.e., ${α}_{1} = max \left(sfm,min\left(A,sfm+A∗\left(\frac{CNG _ ITD _ CNT - {cng}_{counter}}{CNG _ ITD _ CNT}\right)\right)\right)$

Other alternatives for changing the filter coefficient may be to set the coefficient to a constant high value (e.g., 0.8) during the *CNG_ITD_CNT* first CNG frames or to use another function that would increase the filter coefficient value over this limited time period. The number of frames during which the modified filter coefficient is used, i.e., *CNG_ITD_CNT,* can also be made adaptive, e.g., allowing a longer period if the *sfm* values are low.

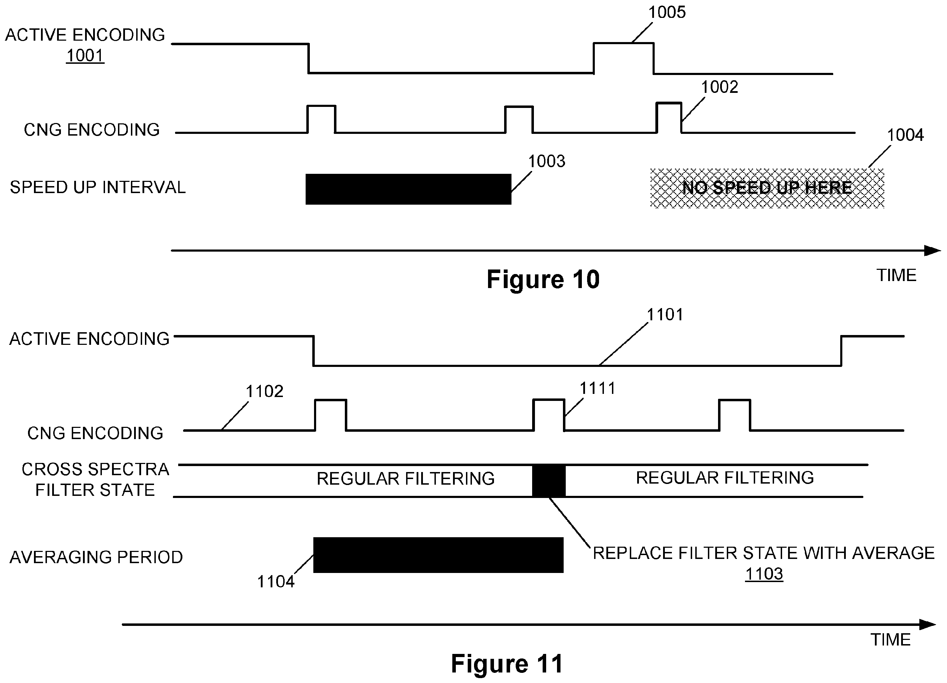

In order to avoid triggering the speed up of the cross-spectrum filtering for short bursts of active encoding (see active encoding signal 1001 in Figure 10), a certain length of the active segment may be required to trigger the speed up (e.g., see speed up interval 1003). One example embodiment is to wait with the reset of the *cng_{counter}* until a certain number of consecutive active frames have been reached. Notably, ${cng}_{counter} = 0 , if {speech}_{counter} > SPEECH _ ITD _ COUNT$ where *SPEECH_ITD_COUNT* may be '8', for example. This procedure is also illustrated in Figure 10 where the short speech burst at the second occurrence 1005 of ACTIVE ENCODING 1001 before the CNG ENCODING 1002 is too short to reset the *cng_{counter}* and activate the speed up logic at the interval 1004, which is shown as a 'no speed up here' interval. The benefit of not applying a speed up in this case is that a more stable and long term ITD estimate is obtained.

Instead of specifying a time interval *CNG_ITD_CNT* for which an adapted filter coefficient is applied, there could be a default coefficient, *α_{default},* (e.g., being based on *sfm)* and an adaptive lower threshold, *α_{threshold}.* Preferably, the filter coefficient is adapted based on how many frames the cross-correlation estimation has been active and/or how many updates of the estimate can be expected until the estimate is to be used, e.g., used to estimate the ITD (as described in more detail below).

In this case, the filter coefficient may be determined as follows: ${X}_{corr _ smooth} \left[k, m\right] = \left(1-{α}_{lim}\right) ⋅ {X}_{corr _ smooth} \left[k,m-1\right] + {α}_{lim} ⋅ {X}_{corr} \left[k\right] ,$ ${α}_{lim} = max \left({α}_{default}, {α}_{threshold}\right)$

The more frames that are involved in the cross-correlation estimate, the smaller the adaptive lower threshold *α_{threshold}* is allowed. However, as the smoothing coefficient decreases, the larger a long-term estimate can be obtained. To ensure the cross-correlation estimate is relevant in the transition between active and inactive coding (e.g., where the estimate should switch from tracking the speech to tracking the background spatial characteristics), further techniques for updating the cross-spectra may be utilized, as described in the following sections.

### Separate the cross spectra filtering between active and CNG encoding

**In** some embodiments, improved tracking of the spatial characteristics may be obtained by executing a dedicated cross-correlation estimate that is only updated (e.g., low-pass filtered) during the CNG periods and to use this estimate for the ITD estimation in the CNG period. This filter could have a fixed or adaptive filter coefficient. This means that in the beginning of each CNG period, the filter starts with the state from the end of the last CNG period. In many cases the background noise has not changed significantly during an active segment. Even if the background noise has changed, this starting point will not necessarily be worse than starting from a filter state acquired during the active speech segment.

### Reset of cross spectra filtering

In some embodiments, there may be benefits to resetting the filter state rather than reusing the state of the previous CNG period, especially if some of the active signal spatial characteristics has got into the filter state in the end of the CNG period where the VAD might not yet have triggered active coding. In other embodiments, it may be beneficial to reset the filter state after a longer segment of active coding (e.g., 20 frames) where it is more likely that the signal characteristics have changed as opposed to only after a few frames.

Therefore, in some embodiments, performing such a reset may be conditioned by designating a certain number of active frames between the CNG periods, as it otherwise is more likely that the previous filter state is an appropriate starting point. In any case, it is important that the update of the cross-correlation estimate (e.g., low-pass filtering of cross-spectra) is not too slow.

### Replace the cross spectra low-pass filter state in the beginning of a CNG period

In some embodiments, the disclosed subject matter pertains to replacing the state of the cross spectra low-pass filter with a state that better reflects the background noise at the start of the CNG period. As shown in Figure 11, one way to accomplish this is to take an average of the cross spectra *X_{corr}*[*k*] over *CNG_ITD_CNT* frames and subsequently replace the filter state *X_{corr_smooth}* with the average. For example, Figure 11 depicts an active encoding signal 1101 and a CNG encoding signal 1102. Figure 11 further shows an averaging period 1104 that is calculated by the encoder and utilized to determine an average filter state value 1103. As shown in Figure 11, the average filter state value 1103 is used to replace a "regular filtering" portion of the cross spectra during one or more certain periods (e.g., period 1111) in the CNG encoding signal 1102. This means that for, e.g., the period 1111, the average filter state value 1103 will be used for ITD estimation. The frame after the replacement the filter is updated in the regular way. This technique may be represented mathematically as follows: ${X}_{corr _ avg _ sum} \left[k, m\right] = {X}_{corr _ avg _ sum} \left[k,m-1\right] + {X}_{corr} \left[k\right] , {cng}_{counter} \leq CNG _ ITD _ CNT$ ${X}_{corr _ smooth} \left[k, m\right] = \left(1-sfm\right) ∗ {X}_{corr _ smooth} \left[k,m-1\right] + sfm ∗ {X}_{corr} \left[k\right] , {cng}_{counter} \neq CNG _ ITD _ CNT$ $\begin{matrix}{X}_{corr _ smooth} \left[k, m\right] = \frac{{X}_{corr _ avg _ sum} \left[k, m\right]}{CNG _ ITD _ CNT + 1} , {cng}_{counter} = CNG _ ITD _ CNT \\ {cng}_{counter} = {cng}_{counter} + 1 , if CNG frame\end{matrix}$ ${cng}_{counter} = 0 , if Speech frame$

In this case, the ITD estimation used for the very first CNG encoding in an inactive segment will not be affected. This means that it will likely reflect the ITD from the preceding active encoding. One alternative to using an average as described above would be to replace the state of the cross spectrum low-pass filter with the state of a cross spectrum filter that is updated only during CNG periods.

### Updates during DTX hangover

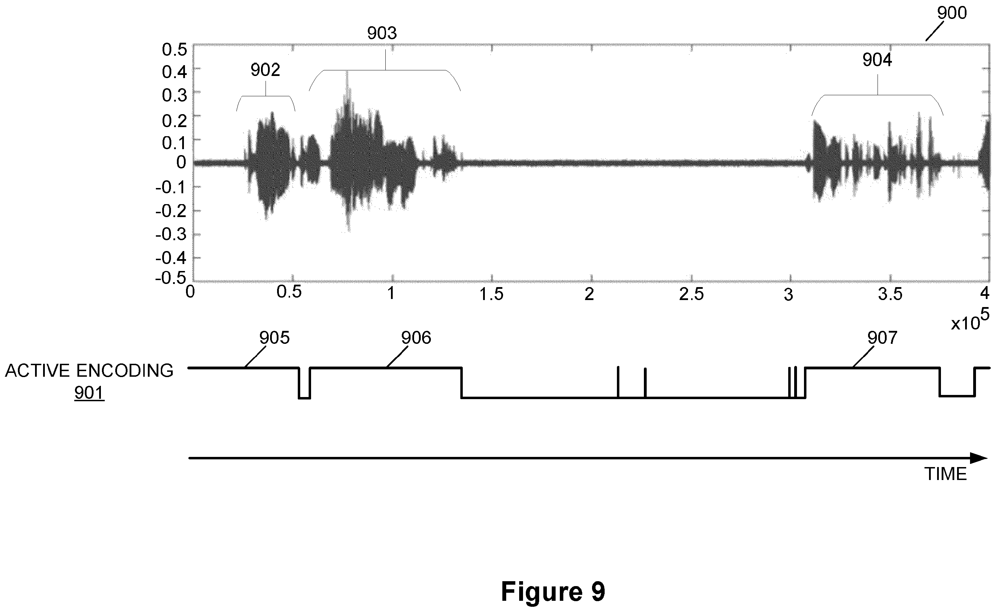

In the VAD used for the DTX system there are measures taken to avoid frequent toggling between active speech and CNG, e.g., the 'hangover' added in the end of a speech segment where active coding modes are selected although the VAD has indicated no activity (i.e., background noise). It will, however, be impossible to have a perfect detection. There will be short spurious bursts of active coding during certain types of background noise, as illustrated by the active encoding segments 905-907 in active encoding signal line 901 and corresponding signaling segments 902-904 in graph 900 of Figure 9. Further, a new speech segment may also start with some toggling of the VAD decision.

In order to prepare for ITD estimation for the first SID frame (e.g., CN encoding), it is beneficial to initiate the update of the cross-correlation estimate during the hangover period before a CNG period (or potentially another active period) is entered. This is especially beneficial if there has been a reset of the cross spectra.

In some embodiments, ITD estimation involves, in the first CN encoding (SID) frame after active coding, replacing the state of a first cross spectra low-pass filter *X_{corr_smooth}* with the state of a second low-pass filter *X_{spec_smooth}*, which also filters the cross spectrum but is only updated during hangover periods and CNG periods. Notably, the first cross spectra low-pass filter is used for the ITD estimation (e.g., for regular active frames, hangover active frames, and inactive frames).

A first adaptive low-pass filter coefficient ${α}_{lim}^{hangover}$*,* which used for updating the second cross spectra low-pass filter during hangover periods, may be determined based on how many frames the cross-correlation estimation has been active and how many updates of the estimate can be expected until the estimate is to be used. Similarly, a second adaptive low-pass filter coefficient ${α}_{lim}^{cng}$, which is used for updating the first cross spectra low-pass filter during CN encoding (e.g., SID frame) periods, may also be determined based on how many frames the cross-correlation estimation has been active and how many updates of the estimate can be expected until the estimate is to be used. The update performed in the first SID frame extending from the hangover period to the CN encoding period may be accomplished using either ${α}_{lim}^{hangover}$ or ${α}_{lim}^{cng}$.

In some embodiments, an accumulated expected number of frames, *N*ₑₓₚ , (until the estimate is to be used) may, for example, be set to '9' in the first hangover region if it is expected that nine (9) hangover frames will be added prior to entering the CN encoding stage. If a reset of the second cross spectra low-pass filter is conducted in accordance with the below equation, *N*ₑₓₚ would be reset to the expected number of hangover frames for the following update period ${N}_{exp}^{hangover}$. Otherwise, if a reset of second cross spectra low-pass filter is not conducted, *N*ₑₓₚ will be increased by the ${N}_{exp}^{hangover}$ expected number of frames after the corresponding segment of active coding.

Similarly, the accumulated expected number of frames *N*ₑₓₚ may be increased by the expected number of frames for the following update period ${N}_{exp}^{cng}$, e.g., being '8' if the SID frames are transmitted every 8^{th} frame, but ${N}_{exp}^{cng}$ may also vary over time if there is a variable SID rate.

It should also be noted that ${N}_{exp}^{hangover}$ and ${N}_{exp}^{cng}$ may not always correspond to the actual number of frames for the update period but instead denote an expected length of those update periods. While a low number of the expected number of frames *N*ₑₓₚ typically results in a faster update of the cross spectra low-pass filters, a larger number of expected number of frames *N*ₑₓₚ should result in a slower update of the cross spectra low-pass filters, thereby giving a more stable estimate of the cross-correlation and the ITD.

In some embodiments, another frame counter *N_{updates}* denotes how many frames have been previously used to update the background cross-correlation estimate. This counter should be reset to '0' when the second cross spectra low-pass filter is reset, which may be done in the hangover period. The reset may only be conducted when a certain number of active frames (e.g., non-hangover frames), e.g., 20 frames, have passed in accordance with the section labeled "Reset of cross spectra filtering", i.e., $\left.\begin{matrix}{X}_{spec _ smooth} \left[k, m\right] = 0 \\ {N}_{updates} = 0\end{matrix}\right\} if {N}_{reset} > NUM _ RESET _ FRAMES$ where *Nᵣₑₛₑₜ* is a counter of active (non-hangover) frames, and the threshold *NUM_RESET_FRAMES* may be '20.' Further, *Nᵣₑₛₑₜ* is reset to '0' when *X_{spec_smooth}* has been reset and during CN encoding. As the VAD is run for each channel individually, there may be hangover for only one of the audio channels of a stereo pair (e.g., only for the left channel of the stereo pair). To trigger an update or trigger a reset of the second cross spectra low-pass filter, hangover for both channels might be required. This means that the counter *Nᵣₑₛₑₜ* may still be increased by one when there is hangover for one of the channels but not for the other. However, other embodiments, an update or reset of the second cross spectra low-pass filter may be triggered as long as there is hangover for any of the channels.

During the CN encoding period, a SID frame is transmitted and a new update period is entered, the expected number of frames is increased by the number of frames expected for the coming update period, i.e., ${N}_{exp} = {N}_{exp} \left[prev\right] + {N}_{exp}^{cng}$ where *N*ₑₓₚ *[prev]* denotes the accumulated expected number of frames prior to the update, and ${N}_{exp}^{cng}$ denotes the expected number of frames for the upcoming update period. If the hangover or CN encoding period is interrupted by active coding, the accumulated expected number of frames *N*ₑₓₚ may be reset to *N_{updates}.*

In some embodiments, the low-pass filter coefficient ${α}_{lim}^{hangover}$ is determined as: ${α}_{lim}^{hangover} = max \left({α}_{default},min\left({A}^{hangover}, \frac{{B}^{hangover}}{{N}_{exp} + {N}_{updates}}\right)\right)$

Similarly, the low-pass filter coefficient ${α}_{lim}^{cng}$ may be determined as: ${α}_{lim}^{cng} = max \left({α}_{default},min\left({A}^{cng}, \frac{{B}^{cng}}{{N}_{exp} + {N}_{updates}}\right)\right)$ where the upper thresholds *A^{hangover}* and *A^{cng}* may e.g., be '0.8', and the rate parameters *B^{hangover}* and *B^{cng},* may be set to '8', for example. Although the thresholds and rate parameters are equal in the example, these values may also differ from each other.

In other embodiments, the rate is dependent on the current number of hangover frames within the hangover period according to: ${α}_{lim}^{hangover} = max \left({α}_{default},min\left({A}^{hangover}, \frac{min \left({B}_{0}+{N}_{hangover},{B}^{hangover}\right)}{{N}_{exp} + {N}_{updates}}\right)\right)$ where *N_{hangover}* corresponds to the number of hangover frames and *B*₀ *=* 1, for example. In some embodiments, the number of hangover frames *N_{hangover}* may be determined from the number of frames where the VAD for both channels are in a hangover mode or determined as the average of the number of hangover frames within the hangover period of the channels. The default filter coefficient may be *α_{default}* = *sfm.* This filter coefficient may typically be used to update the first cross spectra low-pass filter during active frames (i.e., including the hangover period): ${X}_{corr _ smooth} \left[k, m\right] = \left(1-sfm\right) ⋅ {X}_{corr _ smooth} \left[k,m-1\right] + sfm ⋅ {X}_{corr} \left[k\right]$ while for the first CN encoding frame, the first cross spectra low-pass filter state may be set to the state of the second cross spectra low-pass filter: ${X}_{corr _ smooth} \left[k, m\right] = {X}_{spec _ smooth} \left[k,m-1\right] .$

In some embodiments, the CN encoding frames may then be represented as: ${X}_{corr _ smooth} \left[k, m\right] = \left(1-{α}_{lim}^{cng}\right) ⋅ {X}_{corr _ smooth} \left[k,m-1\right] + {α}_{lim}^{cng} ⋅ {X}_{corr} \left[k\right] .$

It should be noted that *N*ₑₓₚ may not account for the expected number of frames in the following update period when ${α}_{lim}^{cng}$ is determined for the SID frames, but updated only after the cross-correlation estimate is updated in the SID frames. In some embodiments, the first cross spectra low-pass filter *X_{corr_smooth}*[*k,* m] may be used for estimating the ITD (e.g., for regular active frames, hangover frames, and inactive frames).

During the hangover, when the first cross spectra low-pass filter is updated using the default filter coefficient *α_{default},* the second cross spectra low-pass filter is adaptively updated based on ${α}_{lim}^{hangover}$ as: ${X}_{spec _ smooth} \left[k, m\right] = \left(1-{α}_{lim}^{hangover}\right) ⋅ {X}_{spec _ smooth} \left[k,m-1\right] + {α}_{lim}^{hangover} ⋅ {X}_{corr} \left[k\right] .$

For the CN encoding frames, the second cross spectra low-pass filter may be updated using another filter coefficient ${α}_{default}^{cng}$ as follows: ${X}_{spec _ smooth} \left[k, m\right] = \left(1-{α}_{default}^{cng}\right) ⋅ {X}_{spec _ smooth} \left[k,m-1\right] + {α}_{default}^{cng} ⋅ {X}_{corr} \left[k\right] ,$ where the filter coefficient ${α}_{default}^{cng}$ may be signal dependent or set to a fixed value of 1/32, for example.

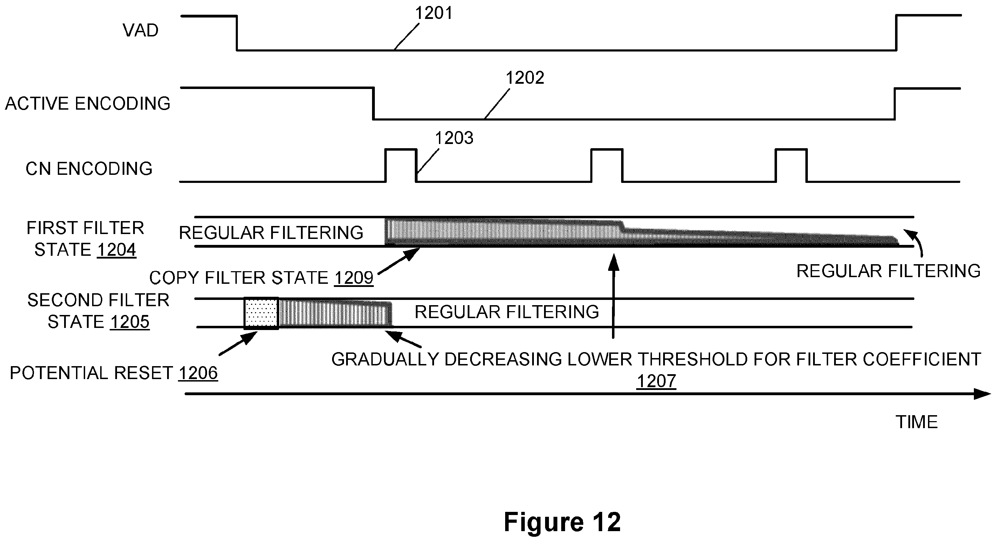

Figure 12 illustrates an example of one solution for ITD estimation, utilizing two cross-spectra filter states, a first filter state 1204 and a second filter state 1205. Figure 12 further illustrates a potential reset 1206 of the second filter state 1205 and an adaptive gradually decreasing filter update coefficient 1207 based on how many frames the cross-correlation estimation has been active and how many updates of the estimate can be expected until the estimate is to be used. An important effect here is that already under the hangover period (if present), here seen as the period where the VAD 1201 is not indicate active signal (being lowered) while there is still active encoding 1202, the second filter state 1205 may be reset 1206 and/or updated to capture recent signal characteristics for the ITD estimate by being copied 1209 to the first filter state 1204 at the start of the CN encoding period 1203. Also, as indicated for both filtering using the second filter state 1205 and the updated filtering using the first filter state 1204, an adaptive gradually decreasing lower threshold 1207 for the filtering coefficient may be used, based on how many frames the cross-correlation estimation has been active and how many updates of the estimate can be expected until the estimate is to be used. This allows the estimate to better adapt to the recent signal characteristics, while still obtaining a more stable ITD estimate at the point it is to be used. Since the first filter state is used to estimate the ITD during active encoding, it cannot be replaced by the second filter state until the active encoding stops and there is inactive encoding by the CN encoding mode. When the VAD 1201 once again indicates an active signal, and the active encoding 1202 is re-enabled, regular filtering is applied.

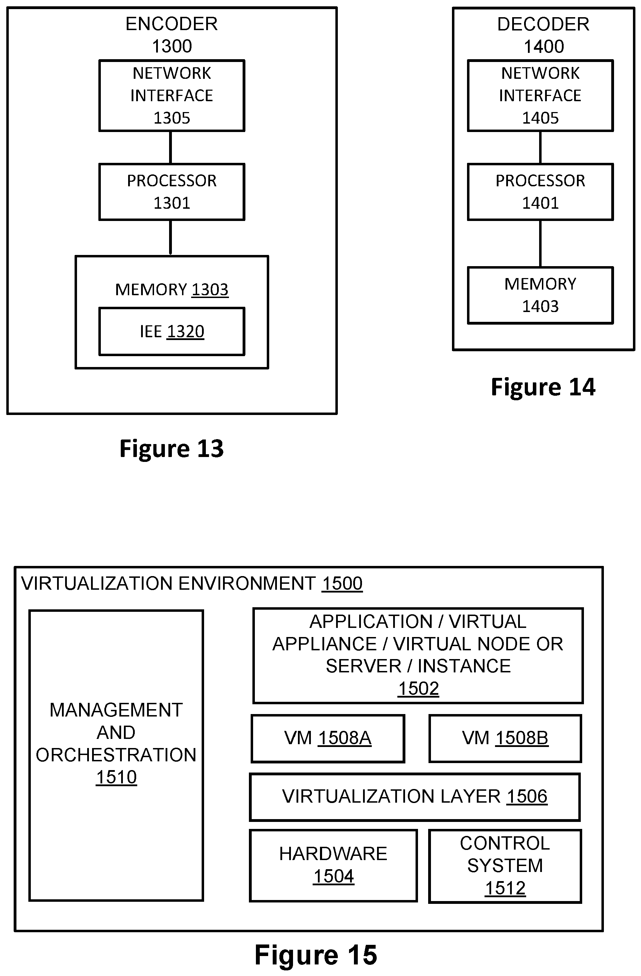

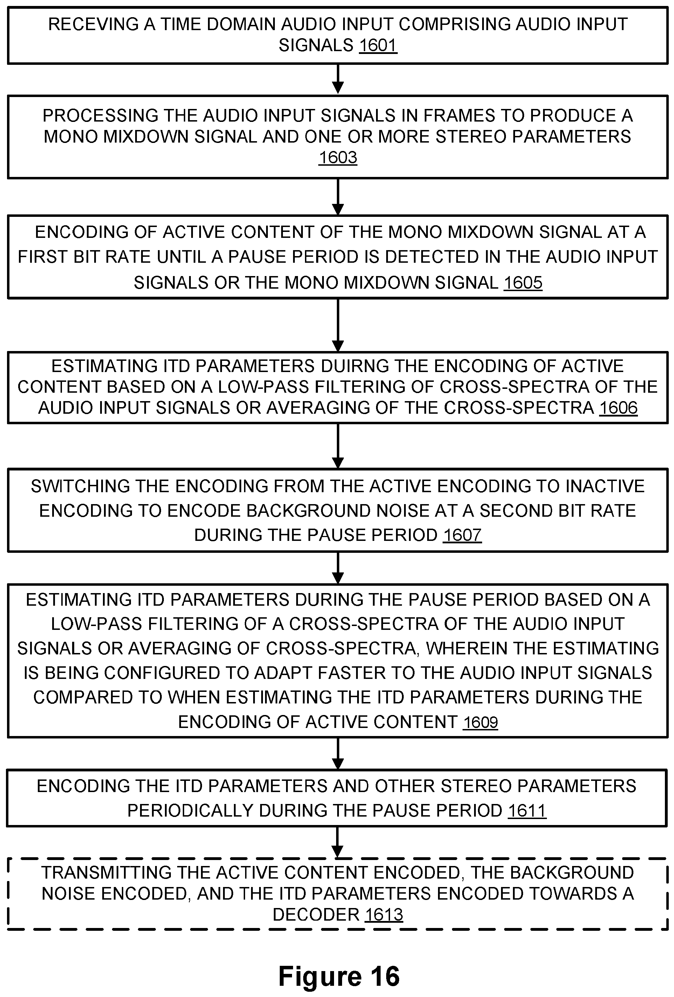

Prior to describing operations from the perspective of the encoder , Figure 13 is a block diagram illustrating elements of the encoder 1300 configured to encode audio frames according to the various embodiments herein. Notably, encoder 1300 is capable of performing at least the same functionalities and/or capabilities of encoder 400 in Figure 4. As shown, encoder 1300 may include a network interface circuitry 1305 (also referred to as a network interface) configured to provide communications with other devices, entities, functions, and the like. The encoder 1300 may also include processing circuitry 1301 (also referred to as a processor and processor circuits) coupled to the network interface circuitry 1305, and a memory circuitry 1303 (also referred to as memory) coupled to the processing circuitry. The memory circuitry 1303 may include computer readable program code that when executed by the processing circuitry 1301 causes the processing circuit to perform operations according to embodiments disclosed herein (e.g., processes 1600-2300 as depicted in Figures 16-23).

According to other embodiments, processing circuitry 1301 may be defined to include memory so that a separate memory circuit is not required. As discussed herein, operations of the encoder 1300 may be performed by processing circuitry 1301 and/or network interface 1305. For example, processing circuitry 1301 may control network interface 1305 to transmit communications to decoder 500 and/or to receive communications through network interface 1305 from one or more other network nodes/entities/servers such as other encoder nodes, depository servers, etc. Moreover, modules may be stored in memory 1303, and these modules may provide instructions so that when instructions of a module are executed by processing circuitry 1301, processing circuitry 1301 performs respective operations. In some embodiments, ITD estimation engine (IEE) 1320 is a software program and/or module that is stored in memory 1303 and is configured to perform the functionalities described herein. For example, ITD estimation engine 1320 may be utilized to perform the steps described in Figures 16-23 below when executed by processing circuitry 1301. In some embodiments, ITD estimation engine 1320 may also be configured to perform the stereo processing and mixdown and mono/speech audio encoder functions executed by modules 402 and 404 in Figure 4.

Figure 14 is a block diagram illustrating elements of decoder 1400 configured to decode audio frames according to some embodiments of inventive concepts. As shown, decoder 1400 may include a network interface circuitry 1405 (also referred to as a network interface) configured to provide communications with other devices/entities/functions/etc. Notably, decoder 1400 is capable of performing at least the same functionalities and/or capabilities of decoder 500 in Figure 5. The decoder 1400 may also include a processing circuitry 1401 (also referred to as a processor or processor circuitry) coupled to the network interface circuit 1405, and a memory circuitry 1403 (also referred to as memory) coupled to the processing circuitry. The memory circuitry 1403 may include computer readable program code that when executed by the processing circuitry 1401 causes the processing circuit to perform operations according to embodiments disclosed herein.

According to other embodiments, processing circuitry 1401 may be defined to include memory so that a separate memory circuit is not required. As discussed herein, operations of the decoder 1400 may be performed by processor 1401 and/or network interface 1405. For example, processing circuitry 1401 may control network interface circuitry 1405 to receive communications from encoder 1300. Moreover, modules may be stored in memory 1403, and these modules may provide instructions so that when instructions of a module are executed by processing circuitry 1401, processing circuitry 1401 performs respective operations.

The encoder 1300 and decoder 1400 may be virtualized in some embodiments by distributing the encoder 1300 and/or decoder 1400 across various components. Figure 15 is a block diagram illustrating an example of a virtualization environment 1500 in which functions implemented by some embodiments may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments 1500 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications 1502 (which may alternatively be called software instances, virtual appliances, network functions, virtual nodes, virtual network functions, etc.) are run in the virtualization environment 1500 to implement some of the features, functions, and/or benefits of some of the embodiments disclosed herein.

Hardware 1504 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers 1506 (also referred to as hypervisors or virtual machine monitors (VMMs)), provide VMs 1508A and 1608B (one or more of which may be generally referred to as VMs 1508), and/or perform any of the functions, features and/or benefits described in relation with some embodiments described herein. The virtualization layer 1506 may present a virtual operating platform that appears like networking hardware to the VMs 1508.

The VMs 1508 comprise virtual processing, virtual memory, virtual networking or interface and virtual storage, and may be run by a corresponding virtualization layer 1506. Different embodiments of the instance of a virtual appliance 1502 may be implemented on one or more of VMs 1508, and the implementations may be made in different ways. Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, a VM 1508 may be a software implementation of a physical machine that runs programs as if they were executing on a physical, non-virtualized machine. Each of the VMs 1508, and that part of hardware 1504 that executes that VM, be it hardware dedicated to that VM and/or hardware shared by that VM with others of the VMs, forms separate virtual network elements. Still in the context of NFV, a virtual network function is responsible for handling specific network functions that run in one or more VMs 1508 on top of the hardware 1504 and corresponds to the application 1502.

Hardware 1504 may be implemented in a standalone network node with generic or specific components. Hardware 1504 may implement some functions via virtualization. Alternatively, hardware 1504 may be part of a larger cluster of hardware (e.g., such as in a data center or CPE) where many hardware nodes work together and are managed via management and orchestration 1510, which, among others, oversees lifecycle management of applications 1502. In some embodiments, hardware 1504 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signaling can be provided with the use of a control system 1512 which may alternatively be used for communication between hardware nodes and radio units.

Operations of the encoder 1300 (implemented using the structure of the block diagram of Figures 4 and 13) will now be discussed with reference to the flow chart of Figure 16 according to some embodiments of inventive concepts. For example, modules may be stored in memory 1303 of Figure 13, and these modules may provide instructions so that when the instructions of a module are executed by respective communication device processing circuitry 1301, the encoder 1300 performs respective operations of the flow chart.

Figure 16 illustrates operations that an encoder 1300 performs in various embodiments. Referring to Figure 16, in block 1601, the encoder 1300 receives a time domain audio input comprising audio input signals. The audio input signals could be speech, music, and combinations thereof.

In block 1603, the encoder 1300 processes the audio input signals in frames to produce a mono mixdown signal and one or more stereo parameters. Various techniques can be used to produce the mono mixdown signal and one or more stereo parameters. For example, the encoder 1300 can perform the processing in the time domain or in the frequency domain.

In blocks 1605-1611, the encoder 1300 encodes the mono mixdown signals (and the one or more stereo parameters). Specifically, in block 1605, the encoder 1300 encodes active content of the mono mixdown signal at a first bit rate until a pause period (e.g., an inactive period) is detected in the audio input signals or the mono mixdown signal. A VAD (e.g., VAD 102) can be used to detect the pause period as described above.

In block 1606, the encoder 1300 is configured to estimate ITD parameters during the encoding of active content based on a low-pass filtering of cross-spectra of the audio input signals or averaging of the cross-spectra.

In block 1607, the encoder 1300 switches the encoding from the active encoding content to inactive encoding to encode background noise at a second bit rate during the pause period. The second bit rate is typically less than the first bit rate as described above.

In block 1609, the encoder 1300 adapts the ITD estimation to the audio input signals faster as compared to when estimating the ITD parameters during the encoding of active content. In some embodiments, adapting the ITD estimation faster comprises speeding up a smoothing of cross-spectra by increasing the low-pass filtering coefficient during a DTX hangover period and/or during a start of the pause period compared to prior to the DTX hangover period and/or the start of the pause period.

In block 1611, the encoder 1300 may be configured to encode the ITD parameters and other stereo parameters periodically during the pause period.

In optional block 1613, the encoder 1300 may be configured to transmit the encoded active content, the encoded background noise, and the encoded ITD parameters towards a decoder.

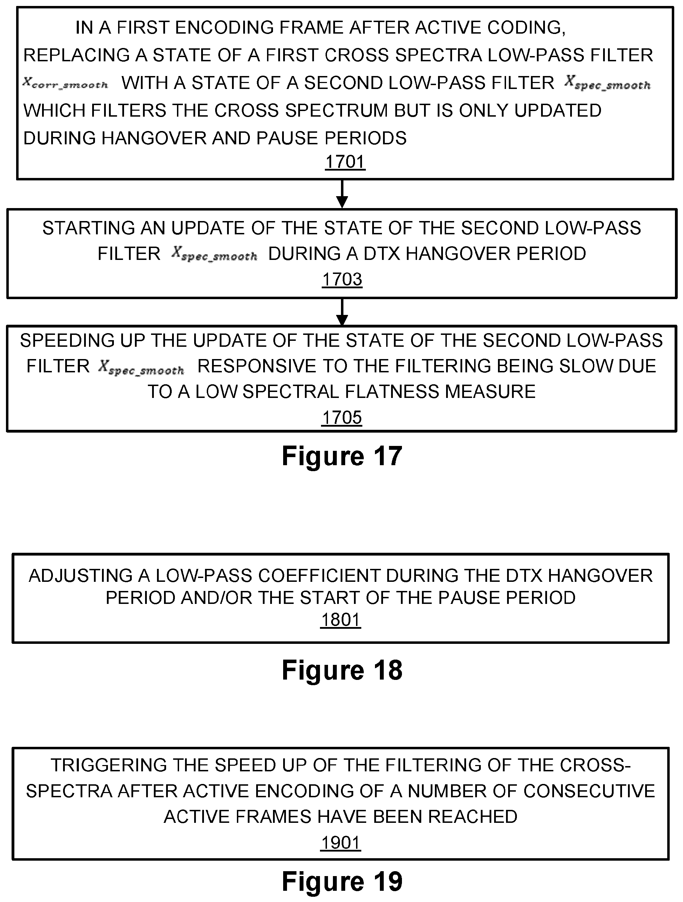

Figure 17 illustrates an alternative and/or additional embodiment for estimating ITD parameters. In some embodiments as illustrated in Figure 17, in adapting the ITD estimation to the audio input signals faster as compared to when estimating the ITD parameters during the encoding of active content, the encoder 1300 in block 1701, in a first encoding frame after active coding, replaces a state of a first cross spectra low-pass filter *X_{corr_smooth}* with a state of a second low-pass filter *X_{spec_smooth}* which filters the cross spectrum but is only updated during hangover and pause periods. In other embodiments, block 1701 includes speeding up the smoothing of the cross spectra of the audio input signals.

In block 1703, the encoder 1300 starts an update of the second low-pass filter *X_{spec_smooth}* during a DTX hangover period. In some of these embodiments, the encoder 1300 in block 1705 speeds up the update of the state of the second low-pass filter *X_{spec_smooth}* in response to the filtering being slow due to a low spectral flatness measure (sfm). In some embodiments, the encoder 1300 is configured to determine *X_{spec_smooth}* as follows: ${X}_{spec _ smooth} \left[k, m\right] = \left(1-{α}_{lim}^{hangover}\right) ⋅ {X}_{spec _ smooth} \left[k,m-1\right] + {α}_{lim}^{hangover} ⋅ {X}_{corr} \left[k\right]$ while *X_{corr_smooth}* is determined as follows: ${X}_{corr _ smooth} \left[k, m\right] = \left(1-{α}_{lim}^{cng}\right) ⋅ {X}_{corr _ smooth} \left[k,m-1\right] + {α}_{lim}^{cng} ⋅ {X}_{corr} \left[k\right]$ where ${α}_{lim}^{hangover}$ and ${α}_{lim}^{cng}$ are low pass coefficients.

In some embodiments, the encoder 1300 determines ${α}_{lim}^{hangover}$ and ${α}_{lim}^{cng}$ in accordance with: ${α}_{lim}^{hangover} = max \left({α}_{default},min\left({A}^{hangover}, \frac{{B}^{hangover}}{{N}_{exp} + {N}_{updates}}\right)\right)$ and ${α}_{lim}^{cng} = max \left({α}_{default},min\left({A}^{cng}, \frac{{B}^{cng}}{{N}_{exp} + {N}_{updates}}\right)\right)$ where *A^{hangover}* and *A^{cng}* are upper thresholds, and *B^{hangover}* and *B^{cng}* are rate parameters.

In other embodiments, the encoder 1300 determines ${α}_{lim}^{hangover}$ and ${α}_{lim}^{cng}$ in accordance with: ${α}_{lim}^{hangover} = max \left({α}_{default},min\left({A}^{hangover}, \frac{min \left({B}_{0}+{N}_{hangover},{B}^{hangover}\right)}{{N}_{exp} + {N}_{updates}}\right)\right)$ and ${α}_{lim}^{cng} = max \left({α}_{default},min\left({A}^{cng}, \frac{{B}^{cng}}{{N}_{exp} + {N}_{updates}}\right)\right)$ where *A^{hangover} and A^{cng}* are upper thresholds, *B^{hangover}* and *B^{cng}* are rate parameters, *N_{hangover}* corresponds to the number of hangover frames, and *B*₀ is a variable.

Figure 18 illustrates an embodiment of speeding up smoothing of cross-spectra using low-pass filtering. Turning to Figure 18, in block 1801, the encoder 1300 may be configured to adjust a low-pass filter coefficient during the DTX hangover period and/or during the start of the pause period.

In some embodiments, the encoder 1300 is configured to adjust the low-pass filter coefficient in accordance with: ${X}_{corr _ smooth} \left[k, m\right] \left[k, m\right] = \left(1-{α}_{1}\right) ⋅ {X}_{corr _ smooth} \left[k, m\right] \left[k,m-1\right] + {α}_{1} ⋅ {X}_{corr} \left[k\right] ,$ ${cng}_{counter} < {CNG}_{{ITD}_{CNT}}$ ${X}_{{corr}_{smooth}} \left[k, m\right] = \left(1-sfm\right) ⋅ {X}_{{corr}_{smooth}} \left[k,m-1\right] + sfm ⋅ {X}_{corr} \left[k\right] ,$ ${cng}_{counter} \geq CNG _ ITD _ CNT$ ${α}_{1} = min \left(A, sfm+A∗\left(\frac{CNG _ ITD _ CNT - {cng}_{counter}}{CNG _ ITD _ CNT}\right)\right)$ ${cng}_{counter} = {cng}_{counter} + 1 , if CNG frame$ ${cng}_{counter} = 0 , if Speech frame$ where *α*₁ is the low-pass filter coefficient, *k = frequency bin,* m = *frame number, X_{corr}*[*k*] is a cross spectrum, *X_{corrₛₘₒₒₜₕ}*[*k,* m] is a low-pass filtering of the cross-spectrum, CNG frame is an inactive coding frame, Speech frame is an active encoding frame, *sfm* is a spectral flatness measure, and *A* is an upper threshold.

In some other embodiments as illustrated in block 1901 of Figure 19, the encoder 1300 speeds up smoothing of cross-spectra by the low-pass filtering during a start of the pause period by triggering the speed up of the filtering of the cross-spectra after active encoding of a number of consecutive active frames have been reached.

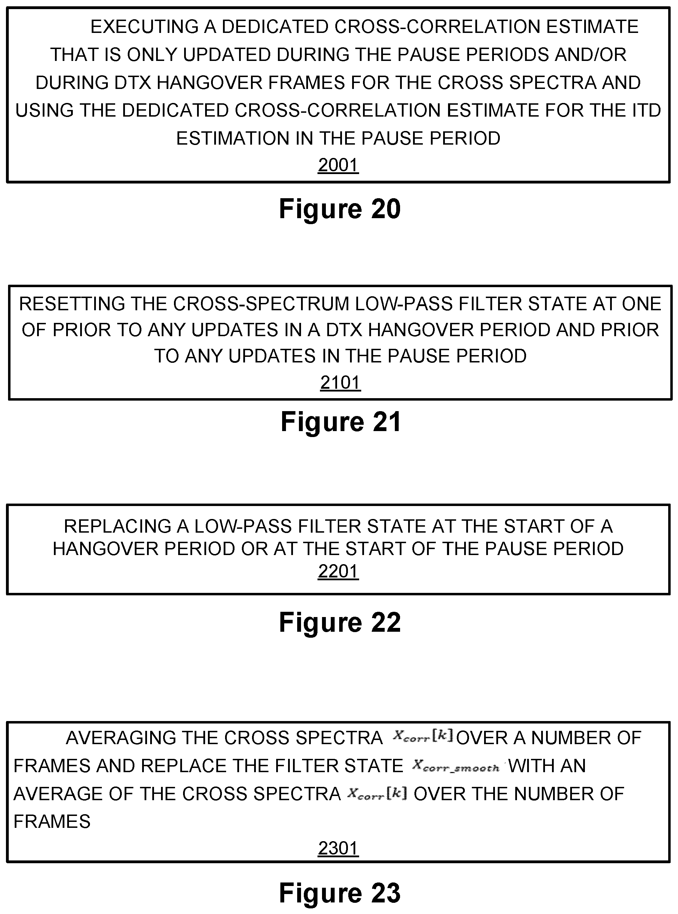

In other embodiments, the speeding up can be aided by a dedicated cross-correlation estimate. Turning to Figure 20, in block 2001, the encoder 1300 executes a dedicated cross-correlation estimate that is only updated during the pause periods and/or during DTX hangover frames for the cross spectra and using the dedicated cross-correlation estimate for the ITD estimation in the pause period.

In further embodiments as illustrated in block 2101 of Figure 21, the encoder 1300 speeds up smoothing of cross-spectra by the low-pass filtering by resetting the cross-spectrum low-pass filter state at one of prior to any updates in a DTX hangover period and prior to any updates in the pause period.

In yet other embodiments as illustrated in block 2201 of Figure 22, the encoder 1300 speeds up smoothing of cross-spectra by the low-pass filtering by replacing a low-pass filter state at the start of a hangover period or at the start of the pause period.

In still further embodiments as illustrated in block 2301 of Figure 23, the encoder 1300 replaces the low-pass filtering at the start of the pause period by averaging the cross spectra *X_{corr}*[*k*] over a number of *CNG*_*ITD_CNT* frames and replace the filter state *X_{corr_smooth}* with an average of the cross spectra *X_{corr}*[*k*] over the number of *CNG*_*ITD_CNT* frames.

Although the computing devices described herein (e.g., encoders, decoders, UEs, network nodes) may include the illustrated combination of hardware components, other embodiments may comprise computing devices with different combinations of components. It is to be understood that these computing devices may comprise any suitable combination of hardware and/or software needed to perform the tasks, features, functions and methods disclosed herein. Determining, calculating, obtaining or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box, or nested within multiple boxes, in practice, computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored on in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hard-wired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device but are enjoyed by the computing device as a whole, and/or by end users and a wireless network generally.

## Claims

1. A method to estimate an inter-channel time difference, ITD, in an encoder (1300, 1508A, 1508B) using a discontinuous transmission, DTX, the method comprising:
receiving (1601) a time domain audio input comprising audio input signals;
processing (1603) the audio input signals in frames to produce a mono mixdown signal and one or more stereo parameters;
encoding the mono mixdown signal on a frame-by-frame basis by:
encoding (1605) of active content of the mono mixdown signal at a first bit rate until a pause period is detected in the audio input signals or mono mixdown signal;
estimating (1606) ITD parameters during the encoding of active content based on a low-pass filtering of cross-spectra of the audio input signals or averaging of the cross-spectra;
switching (1607) the encoding from the active encoding content to inactive encoding to encode background noise at a second bit rate during the pause period;
estimating (1609) ITD parameters during the pause period based on a low-pass filtering of the cross-spectra of the audio input signals or averaging of the cross-spectra wherein the estimating is being configured to adapt faster to the audio input signals compared to when estimating the ITD parameters during the encoding of active content; and
encoding (1611) the estimated ITD parameters and other stereo parameters periodically during the pause period.

2. The method of claim 1 wherein the estimating is being configured to adapt to the audio input signals faster as compared to when estimating the ITD parameters during the encoding of active content comprises:
speeding up a smoothing of a cross-spectra by increasing the low-pass filtering coefficient during a DTX hangover period and/or during a start of the pause period compared to prior to the DTX hangover period and/or the start of the pause period.

3. The method of claim 1 wherein the estimating is being configured to adapt faster to the audio input signals compared to when estimating the ITD parameters during the encoding of active content comprises:
in a first encoding frame after active coding, replacing (1701) a state of a first cross spectra low-pass filter *X_{corr_smooth}* with a state of a second low-pass filter *X_{spec_smooth}* which filters the cross spectrum but is only updated during hangover and pause periods.

4. The method of claim 3, further comprising:
starting (1703) an update of the second low-pass filter *X_{spec_smooth}* during a DTX hangover period.

5. The method of any of claims 2-4, further comprising speeding (1705) up the update of the state of the second low-pass filter *X_{spec_smooth}* responsive to the filtering being slow due to a low spectral flatness measure, *sfm.*

6. The method of any of claims 3-5, wherein *X_{spec_smooth}* is determined in accordance with ${X}_{spec _ smooth} \left[k, m\right] = \left(1-{α}_{lim}^{hangover}\right) ⋅ {X}_{spec _ smooth} \left[k,m-1\right] + {α}_{lim}^{hangover} ⋅ {X}_{corr} \left[k\right]$ and *X_{corr_smooth}* is determined in accordance with ${X}_{corr _ smooth} \left[k, m\right] = \left(1-{α}_{lim}^{cng}\right) ⋅ {X}_{corr _ smooth} \left[k,m-1\right] + {α}_{lim}^{cng} ⋅ {X}_{corr} \left[k\right]$ where ${α}_{lim}^{hangover}$ and ${α}_{lim}^{cng}$ are low pass coefficients.

7. The method of claim 6, wherein ${α}_{lim}^{hangover}$ and ${α}_{lim}^{cng}$ are determined in accordance with ${α}_{lim}^{hangover} = max \left({α}_{default},min\left({A}^{hangover}, \frac{{B}^{hangover}}{{N}_{exp} + {N}_{updates}}\right)\right)$ and ${α}_{lim}^{cng} = max \left({α}_{default},min\left({A}^{cng}, \frac{{B}^{cng}}{{N}_{exp} + {N}_{updates}}\right)\right)$ where *A^{hangover}* and *A^{cng}* are upper thresholds, and *B^{hangover}* and *B^{cng}* are rate parameters.

8. The method of claim 6, wherein ${α}_{lim}^{hangover}$ and ${α}_{lim}^{cng}$ are determined in accordance with ${α}_{lim}^{hangover} = max \left({α}_{default},min\left({A}^{hangover}, \frac{min \left({B}_{0}+{N}_{hangover},{B}^{hangover}\right)}{{N}_{exp} + {N}_{updates}}\right)\right)$ and ${α}_{lim}^{cng} = max \left({α}_{default},min\left({A}^{cng}, \frac{{B}^{cng}}{{N}_{exp} + {N}_{updates}}\right)\right)$ where *A^{hangover}* and *A^{cng}* are upper thresholds, *B^{hangover}* and *B^{cng}* are rate parameters, *N_{hangover}* corresponds to the number of hangover frames and *B*₀ is a variable.

9. The method of any of claims 1-8 wherein the estimating is being configured to adapt faster to the audio input signals compared to when estimating the ITD parameters during the encoding of active content comprises:
adjusting (1801) a low-pass filter coefficient during the DTX hangover period and/or during the start of the pause period.

10. The method of claim 9 wherein adjusting the low pass filter coefficient comprises adjusting the low-pass filter coefficient in accordance with $\begin{matrix}{X}_{corr _ smooth} \left[k, m\right] = \left(1-{α}_{1}\right) ⋅ {X}_{{corr}_{smooth}} \left[k,m-1\right] + {α}_{1} ⋅ {X}_{corr} \left[k\right] , {cng}_{counter} \\ < CNG _ ITD _ CNT\end{matrix}$ $\begin{matrix}{X}_{corr _ smooth} \left[k, m\right] = \left(1-sfm\right) ⋅ {X}_{corr _ smooth} \left[k,m-1\right] + sfm ⋅ {X}_{corr} \left[k\right] , {cng}_{counter} \\ \geq CNG _ ITD _ CNT\end{matrix}$ ${α}_{1} = min \left(A, sfm+A∗\left(\frac{CNG _ ITD _ CNT - {cng}_{counter}}{CNG _ ITD _ CNT}\right)\right)$ ${cng}_{counter} = {cng}_{counter} + 1 , if CNG frame$ ${cng}_{counter} = 0 , if Speech frame$ where *α*₁ is the low-pass filter coefficient, *k = frequency bin, m* = *frame number, X_{corr}*[*k*] is a cross spectrum, *X_{corr_smooth}[k,* m] is a low-pass filtering of the cross-spectrum, CNG frame is an inactive coding frame, and Speech frame is an active encoding frame, and *sfm* is a spectral flatness measure, A is an upper threshold.

11. The method of any of claims 1, 2 or 5, wherein the estimating the ITD parameters further comprises speeding up smoothing of cross-spectra by the low-pass filtering during a start of the pause period comprises triggering (1901) the speed up of the filtering of the cross-spectra after active encoding of a number of consecutive active frames have been reached.

12. The method of any of claims 1-11, further comprising:
executing (2001) a dedicated cross-correlation estimate that is only updated during the pause periods and/or during DTX hangover frames for the cross spectra and using the dedicated cross-correlation estimate for the ITD estimation in the pause period.

13. The method of any of claims 1-12, further comprising:
resetting (2101) the cross-spectrum low-pass filter state at one of prior to any updates in a DTX hangover period and prior to any updates in the pause period.

14. The method of any of claims 1-13, further comprising:
replacing (2201) a low-pass filter state at the start of a hangover period or at the start of the pause period.

15. The method of claim 14, wherein replacing the low-pass filtering at the start of the pause period comprises averaging (2301) the cross spectra *X_{corr_}*[*k*] over a number of *CNG*_*ITD_CNT* frames and replace the filter state *X*_{*corr*_*smooth*} with an average of the cross spectra *X_{corr_}[k]* over the number of *CNG_ITD_CNT* frames.

16. The method of any of claims 1-15 further comprising:
transmitting (1613) the active content encoded, the background noise encoded, and the ITD parameters and other stereo parameters encoded towards a decoder (500).

17. An encoder (1300, 1508A, 1508B) adapted to perform operations comprising:
receiving (1601) a time domain audio input comprising audio input signals;
processing (1603) the audio input signals in frames to produce a mono mixdown signal and one or more stereo parameters;
encoding the mono mixdown signal on a frame-by-frame basis by:
encoding (1605) of active content of the mono mixdown signal at a first bit rate until a pause period is detected in the audio input signals or mono mixdown signal;
estimating (1606) ITD parameters during the encoding of active content based on a low-pass filtering of cross-spectra of the audio input signals or averaging of the cross-spectra;
switching (1607) the encoding from the active encoding content to inactive encoding to encode background noise at a second bit rate during the pause period;
estimating (1609) ITD parameters during the pause period based on a low-pass filtering of the cross-spectra of the audio input signals or averaging of the cross-spectra wherein the estimating is being configured to adapt to the audio input signals faster compared to when estimating the ITD parameters during the encoding of active content; and
encoding (1611) the estimated ITD parameters and other stereo parameters periodically during the pause period.

18. The encoder (1300, 1508A, 1508B) of claim 17 wherein the encoder (400, 1508A, 1508B) performs the method according to any of claims 2-16.

## Patentansprüche

1. Verfahren zur Schätzung einer Zeitdifferenz zwischen Kanälen, ITD, in einem Encoder (1300, 1508A, 1508B) unter Verwendung einer diskontinuierlichen Übertragung, DTX, wobei das Verfahren Folgendes umfasst:
Empfangen (1601) einer Zeitdomänen-Audioeingabe, die Audioeingangssignale umfasst;
Verarbeiten (1603) der Audioeingangssignale in Frames, um ein Mono-Mixdown-Signal und einen oder mehrere Stereoparameter zu erzeugen;
Codieren des Mono-Mixdown-Signals auf einer Frame-für-Frame-Basis durch:
Codieren (1605) von aktivem Inhalt des Mono-Mixdown-Signals mit einer ersten Bitrate, bis eine Pausenzeit in den Audioeingangssignalen oder dem Mono-Mixdown-Signal erkannt wird;
Schätzen (1606) von ITD-Parametern während des Codierens des aktiven Inhalts basierend auf einem Tiefpassfiltern von Kreuzspektren der Audioeingangssignale oder Mitteln der Kreuzspektren;
Umschalten (1607) der Codierung von der aktiven Codierung von Inhalt auf inaktive Codierung, um Hintergrundrauschen während der Pausenzeit mit einer zweiten Bitrate zu codieren;
Schätzen (1609) von ITD-Parametern während der Pausenzeit basierend auf einem Tiefpassfiltern der Kreuzspektren der Audioeingangssignale oder Mitteln der Kreuzspektren, wobei das Schätzen so konfiguriert ist, dass es sich schneller an die Audioeingangssignale anpasst als beim Schätzen der IDT-Parameter während des Codierens von aktivem Inhalt; und
periodisches Codieren (1611) der geschätzten ITD-Parameter und anderer Stereoparameter während der Pausenzeit.

2. Verfahren nach Anspruch 1, wobei, dass das Schätzen so konfiguriert ist, dass es sich schneller an die Audioeingangssignale anpasst als beim Schätzen der ITD-Parameter während des Codierens von aktivem Inhalt, Folgendes umfasst:
Beschleunigen eines Glättens eines Kreuzspektrums durch Erhöhen des Tiefpassfilterkoeffizienten während einer DTX-Überhangzeit und/oder während eines Beginns der Pausenzeit im Vergleich zu vor der DTX-Überhangzeit und/oder dem Beginn der Pausenzeit.

3. Verfahren nach Anspruch 1, wobei, dass das Schätzen so konfiguriert ist, dass es sich schneller an die Audioeingangssignale anpasst als beim Schätzen der ITD-Parameter während des Codierens von aktivem Inhalt, Folgendes umfasst:
in einem ersten Codierungsframe nach der aktiven Codierung Ersetzen (1701) eines Zustands eines ersten Kreuzspektrum-Tiefpassfilters *X_{corr_smooth}* durch einen Zustand eines zweiten Tiefpassfilters *X_{spec_smooth},* das das Kreuzspektrum filtert, aber nur während der Überhang- und der Pausenzeit aktualisiert wird.

4. Verfahren nach Anspruch 3, ferner umfassend:
Starten (1703) einer Aktualisierung des zweiten Tiefpassfilters *X_{spec_smooth}* während einer DTX-Überhangzeit.

5. Verfahren nach einem der Ansprüche 2-4, ferner umfassend Beschleunigen (1705) der Aktualisierung des Zustands des zweiten Tiefpassfilters *X_{spec_smooth}* in Reaktion darauf, dass das Filtern aufgrund eines niedriges Maßes spektraler Flachheit, sfm, langsam ist.

6. Verfahren nach einem der Ansprüche 3-5, wobei *X_{spec_smooth}* gemäß ${X}_{spec _ smooth} \left[k, m\right] = \left(1-{α}_{lim}^{handover}\right) ⋅ {X}_{spec _ smooth} \left[k,m-1\right] + {α}_{lim}^{handover} ⋅ {X}_{corr} \left[k\right]$ bestimmt wird und *X_{corr_smooth}* gemäß ${X}_{corr _ smooth} \left[k, m\right] = \left(1-{a}_{lim}^{cng}\right) ⋅ {X}_{corr _ smooth} \left[k, m-1\right] + {a}_{lim}^{cng} ⋅ {X}_{corr} \left[k\right]$ bestimmt wird, wobei ${α}_{lim}^{handover}$ und ${α}_{lim}^{cng}$ Tiefpasskoeffizienten sind.

7. Verfahren nach Anspruch 6, wobei ${α}_{lim}^{handover}$ und ${α}_{lim}^{cng}$ gemäß ${α}_{lim}^{hangover} = max \left({α}_{default},min\left({A}^{hangover}, \frac{{B}^{hangover}}{{N}_{exp} + {N}_{updates}}\right)\right)$ und ${α}_{lim}^{cng} = max \left({α}_{default},min\left({A}^{cng}, \frac{{B}^{cng}}{{N}_{exp} + {N}_{updates}}\right)\right)$ bestimmt werden, wobei *A^{hangover}* und *A^{cng}* obere Schwellenwerte sind und *B^{hangover}* und *B^{cng}* Ratenparameter sind.

8. Verfahren nach Anspruch 6, wobei ${α}_{lim}^{handover}$ und ${α}_{lim}^{cng}$ gemäß ${α}_{lim}^{hangover} = max \left({α}_{default},min\left({A}^{hangover}, \frac{min \left({B}_{0}+{N}_{hangover},{B}^{hangover}\right)}{{N}_{exp} + {N}_{updates}}\right)\right)$ und ${α}_{lim}^{cng} = max \left({α}_{default},min\left({A}^{cng}, \frac{{B}^{cng}}{{N}_{exp} + {N}_{updates}}\right)\right)$ bestimmt werden, wobei ***A^{hangover}*** und ***A^{cng}*** obere Schwellenwerte sind und ***B^{hangover}*** und ***B**^{cng}* Ratenparameter sind, *N_{hangover}* der Anzahl von Überhangframes entspricht und *B*₀ eine variable ist.

9. Verfahren nach einem der Ansprüche 1-8, wobei, dass das Schätzen so konfiguriert ist, dass es sich schneller an die Audioeingangssignale anpasst als beim Schätzen der ITD-Parameter während des Codierens von aktivem Inhalt, Folgendes umfasst:
Angleichen (1801) eines Tiefpassfilterkoeffizienten während der DTX-Überhangzeit und/oder während des Beginns der Pausenzeit.

10. Verfahren nach Anspruch 9, wobei das Angleichen des Tiefpassfilterkoeffizienten Angleichen des Tiefpassfilterkoeffizienten gemäß Folgendem umfasst: ${X}_{corr _ smooth} \left[k, m\right] = \left(1-{α}_{1}\right) ⋅ {X}_{{corr}_{smooth}} \left[k,m-1\right] + {α}_{1} ⋅ {X}_{corr} \left[k\right] ,$ ${cng}_{counter} < CNG _ ITD _ CNT$ ${X}_{corr _ smooth} \left[k, m\right] = \left(1-sfm\right) ⋅ {X}_{cor {r}_{smooth}} \left[k, m-1\right] + sfm ⋅ {X}_{corr} \left[k\right] ,$ ${cng}_{counter} \geq CNG _ ITD _ CNT$ ${α}_{1} = min \left(A, sfm+A∗\left(\frac{CNG _ ITD _ CNT + {cng}_{counter}}{CNG _ ITD _ CNT}\right)\right)$ ${cng}_{counter} = {cng}_{counter} + 1 , falls CNG frame$ ${cng}_{counter} = 0 , falls Speech frame$ wobei α₁ der Tiefpassfilterkoeffizient ist, *k* = *Frequenzbin,* m = *Framenummer, X_{corr}*[*k*] ein Kreuzspektrum ist, *X_{corr_smooth}*[*k, m*] eine Tiefpassfilterung des Kreuzspektrums ist, CNG frame ein inaktiver Codierungsframe ist und Speech frame ein aktiver Codierungsframe ist, und *sfm* ein Maß spektraler Flachheit, A ein oberer Schwellenwert ist.

11. Verfahren nach einem der Ansprüche 1, 2 oder 5, wobei, dass das Schätzen der ITD-Parameter ferner Beschleunigen des Glättens von Kreuzspektren durch das Tiefpassfiltern während eines Beginns der Pausenzeit umfasst, Auslösen (1901) der Beschleunigung der Filterung der Kreuzspektren umfasst, nachdem die aktive Codierung eine Anzahl aufeinanderfolgender aktiver Frames erreicht wurde.

12. Verfahren nach einem der Ansprüche 1-11, ferner umfassend:
Ausführen (2001) einer dedizierten Kreuzkorrelationsschätzung, die nur während der Pausenzeiten und/oder während DTX-Überhangframes für die Kreuzspektren aktualisiert wird, und Verwenden der dedizierten Kreuzkorrelationsschätzung für die ITD-Schätzung in der Pausenzeit.

13. Verfahren nach einem der Ansprüche 1-12, ferner umfassend:
Zurücksetzen (2101) des Kreuzspektrum-Tiefpassfilterzustands vor jeglicher Aktualisierung in einer DTX-Überhangzeit oder vor jeglicher Aktualisierung in der Pausenzeit.

14. Verfahren nach einem der Ansprüche 1-13, ferner umfassend:
Ersetzen (2201) eines Tiefpassfilterzustands zu Beginn einer Überhangzeit und/oder zu Beginn der Pausenzeit.

15. Verfahren nach Anspruch 14, wobei das Ersetzen der Tiefpassfilterung zu Beginn der Pausenzeit Mitteln (2301) der Kreuzspektren *X_{corr}*[*k*] über eine Anzahl von *CNG_ITD_CNT* Frames und das Ersetzen des Filterzustands *X_{corr_smooth}* durch einen Mittelwert der Kreuzspektren *X_{corr_}[k]* über die Anzahl von *CNG_ITD_CNT* Frames umfasst.

16. Verfahren nach einem der Ansprüche 1 bis 15, ferner umfassend:
Senden (1613) des codierten aktiven Inhalts, des codierten Hintergrundrauschens und der codierten ITD-Parameter und anderer codierter Stereoparameter an einen Decoder (500).

17. Encoder (1300, 1508A, 1508B), der dazu ausgelegt ist, Operationen durchzuführen, die Folgendes umfassen:
Empfangen (1601) einer Zeitdomänen-Audioeingabe, die Audioeingangssignale umfasst;
Verarbeiten (1603) der Audioeingangssignale in Frames, um ein Mono-Mixdown-Signal und einen oder mehrere Stereoparameter zu erzeugen;
Codieren des Mono-Mixdown-Signals auf einer Frame-für-Frame-Basis durch:
Codieren (1605) von aktivem Inhalt des Mono-Mixdown-Signals mit einer ersten Bitrate, bis eine Pausenzeit in den Audioeingangssignalen oder im Mono-Mixdown-Signal erkannt wird;
Schätzen (1606) von ITD-Parametern während des Codieren des aktiven Inhalts basierend auf einem Tiefpassfiltern von Kreuzspektren der Audioeingangssignale oder Mitteln der Kreuzspektren;
Umschalten (1607) der Codierung von der aktiven Codierung von Inhalt auf inaktive Codierung, um Hintergrundrauschen während der Pausenzeit mit einer zweiten Bitrate zu codieren;
Schätzen (1609) von ITD-Parametern während der Pausenzeit basierend auf einem Tiefpassfiltern der Kreuzspektren der Audioeingangssignale oder Mitteln der Kreuzspektren, wobei das Schätzen so konfiguriert ist, dass es sich schneller an die Audioeingangssignale anpasst als beim Schätzen der IDT-Parameter während des Codierens von aktivem Inhalt; und
periodisches Codieren (1611) der geschätzten ITD-Parameter und anderer Stereoparameter während der Pausenzeit.

18. Encoder (1300, 1508A, 1508B) nach Anspruch 17, wobei der Encoder (400, 1508A, 1508B) das Verfahren nach einem der Ansprüche 2-16 durchführt.

## Revendications

1. Procédé d'estimation d'une différence de temps entre canaux, ITD, dans un codeur (1300, 1508A, 1508B) à l'aide d'une transmission discontinue, DTX, le procédé comprenant :
la réception (1601) d'une entrée audio de domaine temporel comprenant des signaux d'entrée audio ;
le traitement (1603) des signaux d'entrée audio dans des trames pour produire un signal de mixage mono et un ou plusieurs paramètres stéréo ;
le codage du signal de mixage mono trame par trame par :
le codage (1605) d'un contenu actif du signal de mixage mono à un premier débit binaire jusqu'à ce qu'une période de pause soit détectée dans les signaux d'entrée audio ou dans le signal de mixage mono ;
l'estimation (1606) de paramètres ITD pendant le codage du contenu actif sur la base d'un filtrage passe-bas de spectres croisés des signaux d'entrée audio ou d'un moyennage des spectres croisés ;
la commutation (1607) du codage du contenu de codage actif à un codage inactif pour coder un bruit de fond à un deuxième débit binaire pendant la période de pause ;
l'estimation (1609) de paramètres ITD pendant la période de pause sur la base d'un filtrage passe-bas des spectres croisés des signaux d'entrée audio ou du moyennage des spectres croisés, dans lequel l'estimation est en cours de configuration pour s'adapter plus rapidement aux signaux d'entrée audio que lors de l'estimation des paramètres ITD pendant le codage d'un contenu actif ; et
le codage (1611) périodique des paramètres ITD estimés et d'autres paramètres stéréo pendant la période de pause.

2. Procédé selon la revendication 1, dans lequel l'estimation est en cours de configuration pour s'adapter aux signaux d'entrée audio plus rapidement que lors de l'estimation des paramètres ITD pendant le codage du contenu actif comprend :
l'accélération d'un lissage de spectres croisés par l'augmentation du coefficient de filtrage passe-bas au cours d'une période de maintien DTX et/ou au début de la période de pause par rapport à avant la période de maintien DTX et/ou le début de la période de pause.

3. Procédé selon la revendication 1, dans lequel l'estimation est en cours de configuration pour s'adapter plus rapidement aux signaux d'entrée audio que lors de l'estimation des paramètres ITD pendant le codage du contenu actif comprend :
dans une première trame de codage après un codage actif, le remplacement (1701) d'un état d'un premier filtre passe-bas de spectres croisés *X_{corr_smooth}* par un état d'un deuxième filtre passe-bas *X_{spec_smooth}* qui filtre le spectre croisé mais n'est mis à jour que pendant les périodes de maintien et de pause.

4. Procédé selon la revendication 3, comprenant en outre :
le démarrage (1703) d'une mise à jour du deuxième filtre passe-bas *X_{spec_smooth}* pendant une période de maintien DTX.

5. Procédé selon l'une quelconque des revendications 2 à 4, comprenant en outre l'accélération (1705) de la mise à jour de l'état du deuxième filtre passe-bas *X_{spec_smooth}* en réponse au fait que le filtrage est lent en raison d'une mesure de planéité spectrale, *sfm,* basse.

6. Procédé selon l'une quelconque des revendications 3 à 5, dans lequel *X_{spec_smooth}* est déterminé selon : $\begin{matrix}{X}_{spec _ smooth} \left[k, m\right] = \left(1-{α}_{lim}^{maintien}\right) ⋅ {X}_{spec _ smooth} \left[k,m-1\right] + {α}_{lim}^{maintien} ⋅ \\ {X}_{corr} \left[k\right]\end{matrix}$ et *X_{corr_smooth}* est déterminé selon : ${X}_{corr _ smooth} \left[k, m\right] = \left(1-{α}_{lim}^{cng}\right) ⋅ {X}_{corr _ smooth} \left[k,m-1\right] + {α}_{lim}^{cng} ⋅ {X}_{corr} \left[k\right]$ où ${α}_{lim}^{maintien}$ et ${α}_{lim}^{cng}$ sont des coefficients passe-bas.

7. Procédé selon la revendication 6, dans lequel ${α}_{lim}^{maintien}$ et ${α}_{lim}^{cng}$ sont déterminés selon : ${α}_{lim}^{maintien} = max \left({α}_{d é faut},min\left({A}^{maintien}, \frac{{B}^{maintien}}{{N}_{exp} + {N}_{mises à jour}}\right)\right)$ et ${α}_{lim}^{cng} = max \left({α}_{d é faut},min\left({A}^{cng}, \frac{{B}^{cng}}{{N}_{exp} + {N}_{mises à jour}}\right)\right)$ où *A^{maintien}* et *A^{cng}* sont des seuils supérieurs, et *B^{maintien}* et *B^{cng}* sont des paramètres de débit.

8. Procédé selon la revendication 6, dans lequel ${α}_{lim}^{maintien}$ et ${α}_{lim}^{cng}$ sont déterminés selon : ${α}_{lim}^{maintien} = max \left({α}_{d é fault},min\left({A}^{maintien}, \frac{min \left({B}_{0}+{N}_{maintien},{B}^{maintien}\right)}{{N}_{exp} + {N}_{mises à jour}}\right)\right)$ et ${α}_{lim}^{cng} = max \left({α}_{d é faut},min\left({A}^{cng}, \frac{{B}^{cng}}{{N}_{exp} + {N}_{mises à jour}}\right)\right)$ où ***A^{maintien}*** et *A^{cng}* sont des seuils supérieurs, ***B^{maintien}*** et *B^{cng}* sont des paramètres de débit, ***Nₘₐᵢₙₜᵢₑₙ*** correspond au nombre de trames de maintien et *B*₀ est une variable.

9. Procédé selon l'une quelconque des revendications 1 à 8, dans lequel l'estimation est en cours de configuration pour s'adapter plus rapidement aux signaux d'entrée audio que lors de l'estimation des paramètres ITD pendant le codage d'un contenu actif comprend :
l'ajustement (1801) d'un coefficient de filtre passe-bas pendant la période de maintien DTX et/ou au début de la période de pause.

10. Procédé selon la revendication 9, dans lequel l'ajustement du coefficient de filtre passe-bas comprend l'ajustement du coefficient de filtre passe-bas selon : $\begin{matrix}{X}_{corr _ smooth} \left[k, m\right] \\ = \left(1-{α}_{1}\right) ⋅ {X}_{corr _ smooth} \left[k,m-1\right] + {α}_{1} \\ ⋅ {X}_{corr} \left[k\right] , {cng}_{compteur} < CNG _ ITD _ CNT\end{matrix}$ $\begin{matrix}{X}_{corr _ smooth} \left[k, m\right] \\ = \left(1-sfm\right) ⋅ {X}_{corr _ smooth} \left[k,m-1\right] + sfm \\ ⋅ {X}_{corr} \left[k\right] , {cng}_{compteur} \geq CNG _ ITD _ CNT\end{matrix}$ ${α}_{1} = min \left(A,sfm+A∗\left(\frac{CNG _ ITD _ CNT - {cng}_{compteur}}{CNG _ ITD _ CNT}\right)\right)$ ${cng}_{compteur} = {cng}_{compteur} + 1 , si trame CNG$ ${cng}_{compteur} = 0 , si trame vocale$ où *α*₁ est le coefficient de filtre passe-bas, k = *tranche de fréquence, m = numéro de trame, X_{corr}*[*k*] est un spectre croisé, *X*_{*corr*_*smooth*}[*k*, *m*] est un filtrage passe-bas du spectre croisé, trame CNG est une trame de codage inactive, et trame vocale est une trame de codage active, et *sfm* est une mesure de planéité spectrale, A est un seuil supérieur.

11. Procédé selon l'une quelconque des revendications 1, 2 et 5, dans lequel l'estimation des paramètres ITD comprend en outre l'accélération du lissage de spectres croisés par le filtrage passe-bas au début de la période de pause comprend le déclenchement (1901) de l'accélération du filtrage des spectres croisés après qu'un codage actif d'un nombre de trames actives consécutives est atteint.

12. Procédé selon l'une quelconque des revendications 1 à 11, comprenant en outre :
l'exécution (2001) d'une estimation de corrélation croisée dédiée qui n'est mise à jour que pendant les périodes de pause et/ou pendant des trames de maintien DTX pour les spectres croisés et à l'aide de l'estimation de corrélation croisée dédiée pour l'estimation ITD dans la période de pause.

13. Procédé selon l'une quelconque des revendications 1 à 12, comprenant en outre :
la réinitialisation (2101) de l'état de filtre passe-bas de spectres croisés à l'un parmi avant toute mise à jour dans une période de maintien DTX et avant toute mise à jour dans la période de pause.

14. Procédé selon l'une quelconque des revendications 1 à 13, comprenant en outre :
le remplacement (2201) d'un état de filtre passe-bas au début d'une période de maintien ou au début de la période de pause.

15. Procédé selon la revendication 14, dans lequel le remplacement du filtrage passe-bas au début de la période de pause comprend le moyennage (2301) des spectres croisés *X_{corr}*[*k*] sur un nombre de trames *CNG_ITD_CNT* et le remplacement de l'état de filtre *X_{corr_smooth}* par une moyenne des spectres croisés *X_{corr}*[*k*] sur le nombre de trames *CNG_ITD_CNT.*

16. Procédé selon l'une quelconque des revendications 1 à 15, comprenant en outre :
la transmission (1613) du contenu actif codé, du bruit de fond codé, et des paramètres ITD et d'autres paramètres stéréo codés vers un décodeur (500).

17. Codeur (1300, 1508A, 1508B) adapté pour réaliser des opérations comprenant :
la réception (1601) d'une entrée audio de domaine temporel comprenant des signaux d'entrée audio ;
le traitement (1603) des signaux d'entrée audio dans des trames pour produire un signal de mixage mono et un ou plusieurs paramètres stéréo ;
le codage du signal de mixage mono trame par trame par :
le codage (1605) d'un contenu actif du signal de mixage mono à un premier débit binaire jusqu'à ce qu'une période de pause soit détectée dans les signaux d'entrée audio ou dans le signal de mixage mono ;
l'estimation (1606) de paramètres ITD pendant le codage du contenu actif sur la base d'un filtrage passe-bas de spectres croisés des signaux d'entrée audio ou d'un moyennage des spectres croisés ;
la commutation (1607) du codage du contenu de codage actif à un codage inactif pour coder un bruit de fond à un deuxième débit binaire pendant la période de pause ;
l'estimation (1609) de paramètres ITD pendant la période de pause sur la base d'un filtrage passe-bas des spectres croisés des signaux d'entrée audio ou du moyennage des spectres croisés, dans lequel l'estimation est en cours de configuration pour s'adapter plus rapidement aux signaux d'entrée audio que lors de l'estimation des paramètres ITD pendant le codage d'un contenu actif ; et
le codage (1611) périodique des paramètres ITD estimés et d'autres paramètres stéréo pendant la période de pause.

18. Codeur (1300, 1508A, 1508B) selon la revendication 17, dans lequel le codeur (400, 1508A, 1508B) réalise le procédé selon l'une quelconque des revendications 2 à 16.
